# EUROPÄISCHE PATENTSCHRIFT

(11) **EP 1 412 437 B1**
(45) Veröffentlichungstag und Bekanntmachung des Hinweises auf die Patenterteilung: **12.09.2007**
(21) Anmeldenummer: 02762414.7
(22) Anmeldetag: 30.07.2002
(51) Int. Cl.: C09D 7/12, C09D 163/00

(54) **BINDEMITTELKOMPONENTE FÜR OBERFLÄCHENBESCHICHTUNGSMITTEL MIT VERBESSERTEN HAFTEIGENSCHAFTEN**
BINDING AGENT COMPONENT FOR SURFACE COATING AGENTS WITH IMPROVED ADHESIVE PROPERTIES
COMPOSANTE DE LIANT POUR AGENT D'ENDUCTION DE SURFACE A PROPRIETES D'ADHESION AMELIOREES

(30) Priorität: 03.08.2001 DE 10138127
(43) Veröffentlichungstag der Anmeldung: 28.04.2004
(73) Patentinhaber: Henkel Kommanditgesellschaft auf Aktien, 40589 Düsseldorf (DE)
(72) Erfinder: SCHÖNFELD, Rainer, New Berlin, WI 53151 (US); SCHREIBER, Gerald, 40595 Düsseldorf (DE); RUSTEMEYER, Felix, 41470 Neuss (DE); GANSOW, Michael, 41516 Grevenbroich (DE); FERENCZ, Andreas, 40223 Düsseldorf (DE); SCHMIDT, Tamara, 46049 Oberhausen (DE)
(86) Internationale Anmeldenummer: PCT/EP2002/008454
(87) Internationale Veröffentlichungsnummer: WO 2003/014236

(56) Entgegenhaltungen:
- EP-A- 0 057 396
- EP-A- 0 275 115
- EP-A- 0 751 191
- US-A- 4 058 497
- DATABASE WPI Section Ch, Week 199519 Derwent Publications Ltd., London, GB; Class A21, AN 1995-142956 XP002227675 & JP 07 066538 A (MATSUSHITA DENKI SANGYO KK), 10. März 1995 (1995-03-10)
- PATENT ABSTRACTS OF JAPAN vol. 2000, no. 08, 6. Oktober 2000 (2000-10-06) & JP 2000 143745 A (NIPPON SHOKUBAI CO LTD), 26. Mai 2000 (2000-05-26)
- DATABASE WPI Section Ch, Week 198830 Derwent Publications Ltd., London, GB; Class A28, AN 1988-209581 XP002227676 & JP 63 146486 A (YOKOHAMA RUBBER CO LTD), 18. Juni 1988 (1988-06-18)
- PATENT ABSTRACTS OF JAPAN vol. 012, no. 209 (C-504), 15. Juni 1988 (1988-06-15) & JP 63 010673 A (NITTO ELECTRIC IND CO LTD), 18. Januar 1988 (1988-01-18)

## Beschreibung

Die vorliegende Erfindung betrifft eine Bindemittelkomponente, insbesondere einen Klebstoff, enthaltend mindestens eine Epoxyverbindung oder mindestens eine Aminoverbindung mit mindestens zwei Aminogruppen oder mindestens eine Hydroxyverbindung mit mindestens zwei OH-Gruppen oder mindestens eine Mercaptoverbindung mit mindestens zwei SH-Gruppen oder mindestens ein Isocyanat mit mindestens zwei NCO-Gruppen, ein Verfahren zur Herstellung derartiger Bindemittelkomponenten sowie deren Verwendung.

Der Haftung eines Oberflächenbeschichtungsmittels auf einer Substratoberfläche kommt im Hinblick auf eine dauerhafte Funktion des Oberflächenbeschichtungsmittels große Bedeutung zu. Insbesondere an Klebstoffe, die zwei Substrate möglichst dauerhaft miteinander verbinden sollen, werden diesbezüglich hohe Anforderungen gestellt. Die Klebkraft eines solchen Klebstoffs hängt einerseits von der Kompatibilität zwischen Klebstoff und dem Substrat, auf welchen der Klebstoff aufgetragen werden soll ab, d. h., von der Adhäsion zwischen Klebstoff und Substrat. Darüber hinaus beruht die Klebkraft jedoch auch auf der Kohäsion des Klebstoffs selbst. Bereits kleine Veränderungen in der Zusammensetzung des Klebstoffs oder in dessen molekularer Struktur können eine drastische Verringerung der Klebkraft hervorrufen und damit den Klebstoff entweder von vornherein unbrauchbar machen oder eine unter Verwendung eines solchen Klebstoffs ausgeführte Klebeverbindung schwächen oder sogar ganz zerstören.

Daher ist bereits bei der Formulierung eines Klebstoffs darauf zu achten, daß einzelne, dem Klebstoff zugeführte Komponenten die Klebkraft eines solchen Klebstoffs nicht nachteilig beeinflussen. Darüber hinaus kann eine mit Hilfe eines Klebstoffs ausgeführte Klebeverbindung durch Umwelteinflüsse und damit in Folge einer Veränderung der molekularen Struktur des Klebstoffs ihre Klebkraft über einen bestimmten Zeitraum derart einbüßen, daß eine feste Verbindung zweier Teile nicht mehr gewährleistet werden kann.

Besonders die Haftung von gehärteten Epoxidharzen auf Metallen z. B. bei der strukturellen Verklebung von Metallen mit Epoxidharzklebstoffen, nimmt durch Alterungsprozesse, insbesondere unter dem Einfluß von Feuchtigkeit, erheblich ab. Dies macht häufig den Einsatz aufwendiger Vorbehandlungsmethoden, beispielsweise Primerung, erforderlich. Eine derartige Vorbehandlung ist jedoch unter Kostengesichtspunkten nachteilig. In vielen Fällen, beispielsweise bei Unfallreparaturen in Karosseriebereich, sind diese Vorbehandlungsmethoden darüber hinaus nur eingeschränkt einsetzbar. Dies gilt insbesondere im Hinblick auf im Karosseriebau häufig eingesetzte Stahl- oder Aluminiumbauteile, da die Haftung von 2K-Epoxidharzklebstoffen auf Stahl oder Aluminium, insbesondere bei unzureichender Substratvorbehandlung, häufig sehr schlecht ist.

Als Folge dieser Alterungsprozesse kann der Klebstoff Flexibilität, Kohäsion oder Adhäsion oder eine oder mehrere weitere wichtige Eigenschaften verlieren. Insbesondere dann, wenn ein Klebstoff im Freien eingesetzt werden soll, muß gewährleistet sein, daß derartige, beispielsweise durch Feuchtigkeit hervorgerufene Veränderungen, die zum Verlust der Klebkraft führen, nicht oder nur in unvermeidbar geringem Maße auftreten.

Dieses Bedürfnis hat dazu geführt, daß verschiedene Möglichkeiten vorgeschlagen wurden, um Klebeverbindungen auch unter Einfluß von Umweltbedingungen wie Feuchtigkeit eine verbesserte langfristige Stabilität zu verleihen.

So sind beispielsweise aus dem Stand der Technik heißhärtende Epoxidharzklebstoffe bekannt, die eine unter üblichen Bedingungen ausreichende Haftung auf Aluminiumoberflächen aufweisen. Nachteilig wirkt sich bei diesen Klebstoffen jedoch aus, daß die Alterungsbeständigkeit für manche Anwendungen in Extremfällen nicht ausreichend ist.

In der EP-A-0 275 115 werden Überzugsmittel beschrieben, die bei geringen Temperaturen aushärten. Diese Mittel enthalten: A) eine Hydroxyl-enthaltende Verbindung, B) eine Metallchelat-Verbindung oder eine Metallalkoholat-Verbindung, C) eine Verbindung mit einer sauren Anhydridgruppe sowie gegebenenfalls D) einen Chelatbildner und/oder E) ein tertiäres Amin.

Die JP 07-066538 A betrifft Überzugsmittel auf Basis von Urethan oder Acryl, die einen Chelatbildner und eine alicyclische Epoxiverbindung enthalten. Der Chealtbildner besteht mindestens aus einer Verbindung, ausgewählt aus Betadiketonen und Beta-ketoestern.

Die EP-A-0 057 396 betrifft die Verwendung bestimmter Mengen an Antioxidatien und Komplexbildnern in wasserhaltigen Lacksystemen als Stabilisator gegen Verfärbungen. Als Antioxydantien kommen in Frage: Phenothiazin, 2,2-Methylen-bis/4-methyl-6-tert.-butylphenol), tert.-Butylbrenzcatechin und Hydrochinon. Als Komplexbildner kommen in Frage. Diethylendiamintetraessigsäure, Nitrilotriessigsäure und Diethylentriaminpentaessigsäure.

In der JP 2000-143745 werden härtbare Überzugsmittel oder Klebstoffe für Metalloberflächen beschrieben. Diese Mittel enthalten als Harzkomponente ungesättigte Monomere von Epoxi(meth)acrylat und Styrol sowie ferner einen Chelatbildner mit einem Stickstoffatom, beispielsweise Ethylendiamintetraessigsäure (EDTA).

Die JP 63-146486 A betrifft Überzugsmittel auf Basis von natürlichem Gummi, Styrolbutadien-Copolymer, Acrylnitril-butadien-Copolymer, Phenolharz oder Epoxiharz. Diese Mittel enthalten einen Chelatbildner, ausgewählt aus Benzotriazol, EDTA, Dimethylglyoxim, 2-(3,5-di-tert.-butyl-2-hydroxyphenylbenzotriazol, O-Phenanthrolin, Glycin oder Hydroxansäure.

Die EP-A-0 751 191 beschreibt Straßenmarkierungsfarben, die einen Chelatbildner für Eisen enthalten, vorzugsweise Phosphonate, Phosphorige Säure, EDTA oder eine polymere Carbonsäure.

Die JP 63-010673 betrifft wärmehärtbare Harze auf Basis von Bisphenol-A-epoxiharz oder einem Polyesterharz, die ferner ein Metallpulver und einen Chelatbildner enthalten. Als Chealtbildner kommen beispielsweise EDTA und Salicylsäure in Frage.

Der vorliegenden Erfindung lag die Aufgabe zugrunde, Oberflächenbeschichtungsmittel zur Verfügung zu stellen, die auch unter extremen Umgebungsbedingungen, insbesondere bei starker Feuchtigkeit, eine gute Haftung auf dem Substrat aufweisen. Insbesondere lag der vorliegenden Erfindung die Aufgabe zugrunde, Klebstoffe zur Verfügung zustellen, die auf eine Vielzahl von Substraten, insbesondere jedoch auf Metallen, auch unter feuchten Bedingungen eine ausgezeichnete Adhäsion zum Substrat sowie eine ausgezeichnete Kohäsion aufweisen.

Es wurde nun gefunden, dass Oberflächenbeschichtungsmittel, die Verbindungen mit chelatisierenden Liganden aufweisen, die Haftung derartiger Oberflächenbeschichtungsmittel insbesondere auf metallischen Substraten verbessern. Die der Erfindung zugrundeliegenden Aufgaben werden daher durch Bindemittelkomponenten gelöst, wie sie im Rahmen des nachfolgenden Texts beschrieben sind und wie sie als Bestandteile von Oberflächenbeschichtungsmitteln, insbesondere von Klebstoffen eingesetzt werden können.

Gegenstand der vorliegenden Erfindung ist daher eine Bindemittelkomponente, enthaltend mindestens eine Epoxyverbindung oder mindestens eine Aminoverbindung mit mindestens zwei Aminogruppen oder mindestens eine Hydroxyverbindung mit mindestens zwei OH-Gruppen oder mindestens eine Mercaptoverbindung mit mindestens zwei SH-Gruppen oder mindestens ein Isocyanat mit mindestens zwei NCO-Gruppen und mindestens eine Verbindung mit chelatisierenden Eigenschaften, die eine Amino- oder eine Mercaptogruppe enthält, wobei die Verbindung ausgewählt wird aus aromatischen Amino-Verbindungen oder Mercapto-Verbindungen der allgemeinen Formel I, II oder III 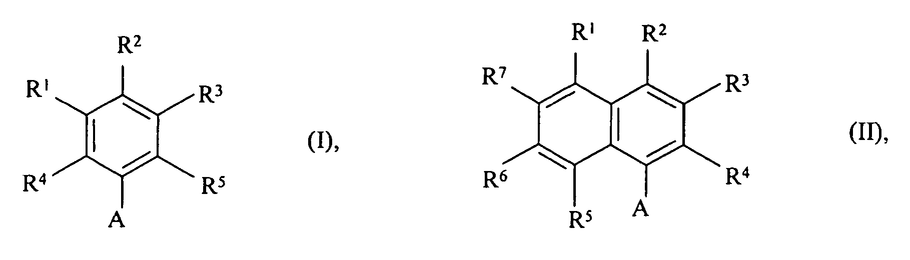 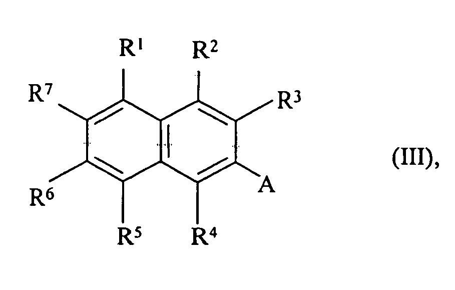 worin A für Y oder X-Y und Y für NH₂, NHR⁸ oder SH und X für einen linearen oder verzweigten Alkylrest mit 1 bis 22 C-Atomen und R¹, R², R³, R⁴, R⁵ sowie in Formeln II und III R⁶ und R⁷ unabhängig voneinander für H, SO₃H, OSO₃H, OP(O)(OH)₂, P(O)(OH)₂, P(O)HOH, COOH, OH, NH₂, NHR⁸, C(O)R⁸, CN oder NO₂, wobei R⁸ für Wasserstoff oder einen linearen oder verzweigten, gesättigten oder ungesättigten aliphatischen Kohlenwasserstoffrest mit 1 bis 10 C-Atomen steht oder zwei benachbarte Reste aus R¹ bis R⁷ zusammen einen aromatischen oder heteroaromatischen Ring bilden, enthält, wobei mindestens zwei der Reste R¹ bis R⁷ nicht für H oder einen Bestandteil eines aromatischen oder heteroaromatischen Ringsystems stehen und die verbleibenden Reste derart angeordnet sind, dass die Verbindung der allgemeinen Formel I, II oder III einen zwei- oder mehrwertigen Metalliganden in Chelatform binden kann.

Unter einer "Bindemittelkomponente" wird im Rahmen der vorliegenden Erfindung daher ein Gemisch verstanden, das mindestens eine Epoxyverbindung oder mindestens eine Aminoverbindung mit mindestens zwei Aminogruppen oder mindestens eine Hydroxyverbindung mit mindestens zwei OH-Gruppen oder mindestens eine Mercaptoverbindung mit mindestens zwei SH-Gruppen oder mindestens ein Isocyanat mit mindestens zwei NCO-Gruppen und mindestens eine Verbindung mit chelatisierenden Eigenschaften enthält. Eine erfindungsgemäße Bindemittelkomponente muß daher mindestens eine Verbindung mit chelatisierenden Eigenschaften enthalten.

Der Begriff "Enthalten" umfaßt dabei im Rahmen der vorliegenden Erfindung sowohl diejenigen Verbindungen mit chelatisierenden Eigenschaften, die in der Bindemittelkomponente als solche in der eingesetzten Form vorliegen, als auch Verbindungen mit chelatisierenden Eigenschaften, die durch eine chemische Reaktion in das Bindemittel eingebunden wurden und mit diesem beispielsweise kovalent verbunden sind.

Unter einer "Bindemittelzusammensetzung" wird im Rahmen der vorliegenden Erfindung eine Zusammensetzung verstanden, die zur Herstellung eines Bindemittels geeignet ist. Der Begriff "Bindemittelzusammensetzung", wie er im Rahmen des vorliegenden Textes verwendet wird, betrifft dabei sowohl Bindemittelzusammensetzungen, die in Form eines Einkomponentensystems vorliegen als auch Bindemittelzusammensetzungen, die in zwei- oder mehrkomponentigen Systemen vorliegen und vom Anwender zur Herstellung des Bindemittels erst vermischt werden müssen. Der Begriff "Bindemittelzusammensetzung" wird daher im Rahmen der vorliegenden Erfindung für die stoffliche Gesamtheit der zur Herstellung eines Bindemittels erforderlichen Bindemittelkomponenten benutzt, unabhängig davon, ob diese Komponenten bereits im vermischten Zustand oder noch räumlich getrennt vorliegen. Entscheidend für die Verwendung des Begriffs " Bindemittelzusammensetzung" ist die Frage, ob die einzelnen Bindemittelkomponenten in einer zur Herstellung eines Bindemittels geeigneten Form abgemischt oder zusammengestellt sind.

Eine erfindungsgemäße Bindemittelkomponente kann daher Bestandteil einer ein- oder mehrkomponentigen Bindemittelzusammensetzung sein, wobei unter dem Begriff "Bindemittelzusammensetzung" die Gesamtheit aller zur Bildung eines Bindemittels erforderlichen Bestandteile verstanden wird. Bei durch chemische Härtung entstehenden Bindemitteln, wie sie im Rahmen der vorliegenden Erfindung beschrieben werden, werden die einzelnen Bestandteile oft auch als "Harz" und "Härter" bezeichnet, wobei Harz und Härter unter bestimmten äußeren Bedingungen, beispielsweise auch bei üblichen Umgebungsbedingungen, miteinender unter Ausbildung kovalenter chemischer Bindungen und unter Bildung von Polymeren zu einem Bindemittel abreagieren.

Der im Rahmen des vorliegenden Textes benutzte Begriff "Bindemittelkomponente" bezieht sich dabei sowohl auf die Komponente "Harz" als auch auf die Komponente "Härter", soweit nicht jeweils ausdrücklich etwas anderes ausgesagt wird.

Eine erfindungsgemäße Bindemittelzusammensetzung kann gemäß der vorliegenden Erfindung beispielsweise nur eine erfindungsgemäße Bindemittelkomponente und eine weitere Bindemittelkomponente, die nicht erfindungsgemäß ausgeführt ist, enthalten. So kann beispielsweise eine erfindungsgemäße Bindemittelzusammensetzung als Bindemittelkomponente ein Harz enthalten, das eine aromatische Aminoverbindung mit chelatisierenden Eigenschaften enthält. Ein solches Harz stellt eine erfindungsgemäße Bindemittelkomponente dar. Die Bindemittelzusammensetzung kann jedoch als Härter beispielsweise eine Aminoverbindung enthalten, die keine aromatische Aminoverbindung mit chelatisierenden Eigenschaften enthält, mithin also keine erfindungsgemäße Bindemittelkomponente darstellt. Die gesamte Bindemittelzusammensetzung weist jedoch aufgrund der in der Bindemittelzusammensetzung enthaltenen erfindungsgemäßen Bindemittelkomponente die erfindungsgemäßen Vorteile auf. Umgekehrt ist es ebenso möglich, daß eine erfindungsgemäße Bindemittelzusammensetzung beispielsweise ein nicht erfindungsgemäßes Harz und einen erfindungsgemäßen Härter als Bindemittelkomponenten enthält. Die Erfindung umfaßt jedoch auch solche Fälle, in denen eine erfindungsgemäße Bindemittelzusammensetzung zwei oder mehr erfindungsgemäße Bindemittelkomponenten aufweist.

Der Begriff "Oberflächenbeschichtungsmittel", wie er im Rahmen des vorliegenden Textes benutzt wird, bezieht sich dabei auf eine Zusammensetzung, die mindestens eine erfindungsgemäße Bindemittelkomponente enthält. Ein Oberflächenbeschichtungsmittel gemäß der vorliegenden Erfindung kann dabei beispielsweise ausschließlich eine erfindungsgemäße Bindemittelzusammensetzung enthalten. Es ist jedoch ebenso möglich und vorgesehen, daß ein erfindungsgemäßes Oberflächenbeschichtungsmittel neben einer Bindemittelzusammensetzung gemäß der vorliegenden Erfindung noch weitere Zusatzstoffe enthält.

In einer ersten Ausführungsform der vorliegenden Erfindung enthält eine erfindungsgemäße Bindemittelkomponente, wie sie beispielsweise als Harz einsetzbar ist, mindestens eine Epoxyverbindung. Als Epoxyverbindungen eignen sich grundsätzlich alle Verbindungstypen, die einen Oxiranring aufweisen.

Beispiele für geeignete Epoxyverbindungen sind epoxidiertes Sojaöl, epoxidiertes Olivenöl, epoxidiertes Leinöl, epoxidiertes Rizinusöl, epoxidiertes Erdnußöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff- oder Stickstoffatom gebunden ist. Glycidyl- oder Methylglycidylester sind durch Umsetzung einer Verbindung mit mindestens einer NH, OH- oder Carboxylgruppe im Molekül und Epichlorhydrin bzw. Glyzerindichlorhydrin bzw. Methyl-epichlorhydrin erhältlich. Die Umsetzung erfolgt zweckmäßigerweise in Gegenwart von Basen.

Als Verbindungen mit mindestens einer Carboxylgruppe im Molekül können beispielsweise aliphatische Carbonsäuren eingesetzt werden. Beispiele für diese Carbonsäuren sind Glutarsäure, Adipinsäure, Pimelinsäure, Korksäure, Azelainsäure, Sebacinsäure oder dimerisierte oder trimerisierte Linolsäure, Acrylsäure, Methacrylsäure, Capronsäure, Caprylsäure, Laurinsäure, Myristinsäure, Palmitinsäure, Stearinsäure oder Pelargonsäure sowie die im weiteren Verlauf dieses Textes erwähnten Mono- oder Polycarbonsäuren. Geeignete Dicarbonsäuren sind beispielsweise Propandicarbonsäure, Butandicarbonsäure (Bemsteinsäure), Pentandicarbonsäure (Glutarsäure), Hexandicarbonsäure (Adipinsäure), Heptandicarbonsäure, Octandicarbonsäure, Nonandicarbonsäure oder Decandicarbonsäure, Dimerfettsäure oder Trimerfettsäure oder ein Gemisch aus zwei oder mehr davon. Ebenfalls geeignet sind die ungesättigten Dicarbonsäuren Maleinsäure, Fumarsäure, Äpfelsäure, Pentendicarbonsäure, Hexendicarbonsäure, Heptendicarbonsäure oder Octendicarbonsäure.

Ebenfalls geeignet sind cycloaliphatische Carbonsäuren wie Cyclohexancarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Weiterhin geeignet sind aromatische Mono- und Polycarbonsäuren wie Benzoesäure, Phthalsäure, Isophthalsäure, Trimellithsäure oder Pyromellithsäure.

Glycidylether oder Methylglycidylether lassen sich auch durch Umsetzung einer Verbindung mit mindestens einer freien alkoholischen OH-Gruppe oder einer phenolischen OH-Gruppe und einem geeignet substituierten Epichlorhydrin unter alkalischen Bedingungen oder in Anwesenheit eines sauren Katalysators und anschließender Alkalibehandlung erhalten. Ether dieses Typs leiten sich beispielsweise von acyclischen Alkoholen wie Ethylenglykol, Diethylenglykol oder höheren Poly(oxyethylen)glykolen, Propan-1,2-diol oder Poly(oxypropylen)glykolen, Butan-1,4-diol, Poly(oxytetramethylen)glykolen, Pentan-1,5-diol,- Hexan-1,6-diol, Hexan-2,4,6-triol, Glyzerin, 1,1,1-Trimethylolpropan, Bis-Trimethylolpropan, Pentaerythrit, Sorbit sowie von Polyepichlorhydrinen, Butanol, Amylalkohol, Pentanol sowie von monofunktionellen Alkoholen wie Isooctanol, 2-Ethylhexanol, Isodecanol oder technischen Alkoholgemischen, beispielsweise technischen Fettalkoholgemischen, ab.

Weitere geeignete Ether leiten sich auch von cycloaliphatischen Alkoholen wie 1,3- oder 1,4-Dihydroxycyclohexan, 1,3- oder 1,4-Cyclohexandimethanol, Bis(4-hydroxycyclöhexyl)methan, 2,2-Bis(4-hydroxycyclohexyl)propan oder 1,1-Bis-(hydroxymethyl)cyclohex-3-en ab oder sie besitzen aromatische Kerne wie N,N-Bis-(2-hydroxyethyl)anilin. Geeignete Epoxyverbindungen können sich auch von einkernigen Phenolen ableiten, beispielsweise von Phenol, Resorcin oder Hydrochinon, oder sie basieren auf mehrkernigen Phenolen wie Bis(4-hydroxyphenyl)methan, 2,2-Bis (4-hydroxyphenyl)propan (Bisphenol A), 2,2-Bis(3,5-dibrom-4-hydroxyphenyl)propan, 4,4'-Dihydroxydiphenylsulfonen oder auf unter sauren Bedingungen erhaltenen Kondensationsprodukten von Phenol mit Formaldehyd, beispielsweise Phenol-Novolaken.

Weitere im Rahmen der vorliegenden Erfindung geeignete Epoxide sind beispielsweise Glycidyl-1-naphthylether, Glycidyl-2-phenylphenylether, 2-Diphenylglycidylether, N-(2,3-Epoxypropyl)phthalimid oder 2,3-Epoxypropyl-4-methoxyphenylether.

Darüber hinaus sind im Rahmen der vorliegenden Erfindung cycloaliphatische Epoxidharze wie (3'4'-Epoxycyclohexylmethyl)-3-4-epoxycyclohexylcarboxylat oder Bis-((3,4-Epoxycyclohexyl)methyl)adipat geeignet.

Ebenfalls geeignet sind N-Glycidylverbindungen, wie sie durch Dehydrochlorierung der Reaktionsprodukte von Epichlorhydrin mit Aminen, die mindestens ein Aminowasserstoffatom enthalten, erhältlich sind. Solche Amine sind beispielsweise Anilin, N-Methylanilin, Toluidin, n-Butylamin, Bis(4-aminophenyl)methan, m-Xylylendiamin oder Bis(4-methylaminophenyl)methan.

Im Rahmen der vorliegenden Erfindung geeignete Epoxyverbindungen weisen mindestens eine Epoxygruppe, vorzugsweise jedoch mehr als eine Epoxygruppe auf. Geeignet sind beispielsweise Epoxyverbindungen die mindestens etwa 1,1, 1,3 oder 1,5 Epoxygruppen pro Molekül, insbesondere jedoch zwei oder mehr Epoxygruppen aufweisen. Wenn die Zahl der Epoxygruppen in einer erfindungsgemäß einsetzbaren Epoxyverbindung keine ganze Zahl ergibt, so handelt es sich dabei um ein Gemisch aus Epoxyverbindungen mit einer unterschiedlichen Zahl an Epoxygruppen. In diesem Fall wird als Zahl der Epoxygruppen pro Molekül der Durchschnittswert für alle vorliegenden, Epoxygruppen tragenden Verbindungen angegeben.

Die Epoxygruppe kann bei den im Rahmen der vorliegenden Erfindung einsetzbaren Epoxyverbindungen entweder terminal oder zentral innerhalb des Moleküls angeordnet sein. Wenn eine erfindungsgemäß einsetzbaren Epoxyverbindung mehr als eine Epoxygruppe trägt, so können diese Epoxygruppen an beliebigen Stellen innerhalb des Moleküls angebracht sein. Wenn im Rahmen der vorliegenden Erfindung beispielsweise polymere Epoxide eingesetzt werden, die mehr als beispielsweise zwei oder drei Epoxygruppen tragen, so können die Epoxygruppen beispielsweise an den Enden des Polymerrückgrats, innerhalb des Polymerrückgrats oder an Seitenketten angeordnet sein.

Im Rahmen einer bevorzugten Ausführungsform werden als Epoxyverbindungen Bisphenol-A-Diglycidylether, epoxidierte Diolefine wie 1,2,5,6-Dieopxyhexan, 1,2,4,5-Diepoxycyclohexan, Dicyclopentadiendiepoxid, Dipentendiepoxid, Vinylcyclohexendiepoxid, epoxidierte mehrfach olefinisch ungesättigte Carbonsäuren wie Methyl-9,10,12,13-Diepoxystearat oder der Dialkylester der 6,7,10,11-Diepoxyhexadecan-1,16-dicarbonsäure eingesetzt.

Ebenfalls geeignet sind epoxidierte Mono-, Di- oder Polyester, Epoxidierte Mono-, Di- oder Polyurethane, Epoxidierte Mono-, Di- oder Polycarbonate oder Epoxidierte Mono, Di- oder Polyacetale, insbesondere solche mit mindestens einem cycloaliphatischen Ring, der mindestens zwei Epoxygruppen trägt. Geeignete Polyester, Polyurethane oder Polycarbonate sind beispielsweise die im Rahmen des weiteren Textes genannten Polyester, Polyurethane oder Polycarbonate, die auf dem Fachmann bekannt Weise mit einer oder mehreren Epoxygruppen versehen werden können. Eine weitere weit verbreitete Klasse von Polyepoxiden sind beispielsweise Epoxypolyether, wie sie sich durch Umsetzung eines halogenhaltigen Epoxids, beispielsweise Epichlorhydrin oder Epibromhydrin, 3-Chlor-1,2-epoxyoctan und dergleichen, mit einem Polyol erhalten lassen.

Weiterhin als Bestandteil einer erfindungsgemäßen Bindemittelkomponente geeignete Verbindungen sind beispielsweise Aminoverbindungen mit mindestens zwei Aminogruppen.

Als nicht-aromatische Aminoverbindungen mit mindestens zwei Aminogruppen eignen sich grundsätzlich alle Di- und Polyamine.

Geeignete derartige Verbindungen sind beispielsweise Ethylendiamin, Propylendiamin, Butylendiamin, Hexamethylendiamin, 2,4,4-Trimethylhexamethylendiamin, Diethylentriamin, 1,12-Diaminododecan, von Dimerfettsäuren abgeleitete Diamine oder von Trimerfettsäuren abgeleitete Triamine, oder ein Gemisch aus zwei oder mehr der genannten Verbindungen.

Geeignete Aminogruppen tragende Cycloalkylverbindungen sind beispielsweise Cyclohexylendiamin, Dicyclohexylendiamin, 4,4'-Dicyclohexylmethandiamin, Isophorondiamin, 1,3-Bis(aminomethyl)cyclohexan 1,4-Bis(aminomethyl)cyclohexan, und hydrierte Toluoldiamine wie 1-Methyl-2,4,-diaminocyclohexan, 1-Methyl-2,6,-diaminocyclohexan und dergleichen.

Ebenfalls als Aminoverbindungen geeignet sind beispielsweise 1,4-Diaminobenzol, Diaminotoluol, m- oder p-Phenylendiamin, Diaminobiphenyl, o-, m- oder p-Toluidin, 2,4-Xylidin, 2,4-, and 2,6-Toluoldiamin und entsprechende Mischungen, 4,4'-Diphenylendiamin, Naphthyldiamine, Bis-(4-aminophenyl)methan oder Gemische aus zwei oder mehr der genannten Verbindungen.

Ebenfalls als Aminoverbindungen geeignet sind beispielsweise 1,3,5-Trisaminoalkyl-, Cycloalkyl- und Arylisocyanurate. Als Beispiele seien genannt: 1,3,5-Tris(6-aminohexyl)isocyanurat, 1,3,5-Tris(6-aminopropy)isocyanurat, 1,3,5-Tris(6-aminoethyl)isocyanurat, 1,3,5-Tris-(3-aminophenyl)isocyanurat und 1,3,5-Tris-(4-methyl-3-aminophenyl)isocyanurat. Ebenfalls einsetzbar sind Gemische aus zwei oder mehr der genannten Verbindungen.

Ebenfalls als Aminoverbindungen im Sinne der vorliegenden Erfindung geeignet sind Polyester, die als Endgruppen oder Seitengruppen oder beidem eine Aminogruppe aufweisen. Derartige Polyester können beispielsweise durch polymeranaloge Reaktion eines Carboxylgruppen tragenden Polyesters mit Polyaminen erhalten werden, wobei der Polyester entweder Aminoendgruppen oder Aminoseitengruppen oder beides aufweist.

Ebenfalls als Aminoverbindungen im Sinne der vorliegenden Erfindung geeignet sind Polyetheramine. Polyetheramine werden beispielsweise durch polymeranaloge Reaktion aus Polyetherpolyolen hergestellt. Geeignete Polyetherpolyole werden üblicherweise durch Umsetzung einer Startverbindung mit mindestens zwei reaktiven Wasserstoffatomen mit Alkylen- oder Arylenoxiden, beispielsweise Ethylenoxid, Propylenoxid, Butylenoxid, Styroloxid, Tetrahydrofuran oder Epichlorhydrin oder Gemischen aus zwei oder mehr davon, erhalten.

Geeignete Startverbindungen sind beispielsweise Wasser, Ethylenglykol, Propylenglykol-1,2 oder -1,3, Butylenglykol-1,4, oder -1,3, Hexandiol-1,6, Octandiol-1,8, Neopentylglykol, 1,4-Hydroxymethylcyclohexan, 2-Methyl-1,3-Propandiol, Glycerin, Trimethylolpropan, Hexantriol-1,2,6, Butantriol-1,2,4, Trimethylolethan, Pentaerythrit, Mannitol, Sorbitol, Methylglykoside, Zucker, Phenol, lsononylphenol, Resorcin, Hydrochinon, 1,2,2- oder 1,1,2-Tris-(hydroxyphenyl)-Ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen.

Die Funktionalisierung der Polyetherpolyole mit Aminogruppen erfolgt in einer dem Fachmann bekannten Weise. So können z.B. herkömmliche Polyetherpolyole durch Umsetzung der endständigen OH-Gruppen mit Ammoniak oder primären Aminen nach literaturbekannten Verfahren in die entsprechenden Polyetheramine überführt werden.

Entsprechende aminofunktionalisierte Polyetherpolyole sind beispielsweise unter dem Handelsnamen JEFFAMIN® in unterschiedlichen Zusammensetzungen im Handel erhältlich. Als Beispiele seien die Jeffamin-Typen D 230, D 400 und D 2000 auf Basis difunktioneller Polypropylenglykole, die Typen T 403, T 3000 und T 5000 auf der Basis trifunktioneller Polyproplenglykole, die Typen ED 600, ED 900, ED 2001 und ED 6000 auf der Basis difunktioneller Polyethylenglykole und die Typen M 300, M 600, M 1000 und M 2070 auf der Basis monofunktioneller Polypropylenglykole.

Ebenfalls als Aminoverbindungen im Sinne der vorliegenden Erfindung geeignet sind Aminogruppen tragende Polyacetale. Unter Polyacetalen werden Verbindungen verstanden, wie sie durch Umsetzung von Glykolen, beispielsweise Diethylenglykol oder Hexandiol, mit Formaldehyd erhältlich sind. Im Rahmen der Erfindung einsetzbaren n Aminogruppen tragenden Polyacetale können auch durch die Polymerisation cyclischer Acetale erhalten werden. Für die Funktionalisierung solcher Polyacetale mit Aminogruppen gilt das bereits im Rahmen der Beschreibung der Polyester gesagte.

Ebenfalls als Aminoverbindungen im Sinne der vorliegenden Erfindung geeignet sind Aminogruppen tragende Polycarbonate. Polycarbonate können beispielsweise durch die Reaktion der oben genannten Polyole, insbesondere von Diolen wie Propylenglykol, Butandiol-1,4 oder Hexandiol-1,6, Diethylenglykol, Triethylenglykol oder Tetraethylenglykol oder Gemischen aus zwei oder mehr davon, mit Diarylcarbonaten, beispielsweise Diphenylcarbonat oder Phosgen, erhalten werden. Für die Funktionalisierung der Polycarbonate mit Aminogruppen gilt das bereits im Rahmen der Beschreibung der Polyester gesagte.

Ebenfalls als Aminoverbindungen im Sinne der vorliegenden Erfindung geeignet sind Aminogruppen tragende Polylactone. Als Polylactone kommen bevorzugt solche in Betracht, die sich von Verbindungen der allgemeinen Formel HO-(CH₂)_{z}-COOH ableiten, wobei z für eine Zahl von 1 bis etwa 20 steht. Beispiele sind ε-Caprolacton, β-Propiolacton, γ-Butyrolacton oder Methyl-ε-caprolacton oder Gemische aus zwei oder mehr davon. Für die Funktionalisierung der Polylactone mit Aminogruppen gilt das bereits im Rahmen der Beschreibung der Polyester gesagte.

Ebenfalls als Aminoverbindungen im Sinne der vorliegenden Erfindung geeignet sind Polyethylenimine. Geeignete Polyethylenimine lassen sich durch polymerisierende Umsetzung von Ethylenimin erhalten und weisen ein Molekulargewicht von etwa 300 bis etwa 100.000 auf.

Ebenfalls als Aminoverbindungen im Sinne der vorliegenden Erfindung geeignet sind Aminogruppen tragende Polyamide. Geeignete Polyamide lassen sich beispielsweise durch Umsetzung der oben genannten Dicarbonsäuren mit entsprechenden Diaminen herstellen. Geeignete Diamine sind beispielsweise solche, die ein Molekulargewicht von etwa 32 bis etwa 200 g/mol aufweisen und mindestens zwei primäre, 2 sekundäre oder eine primäre und eine sekundäre Aminogruppen aufweisen. Beispiele hierfür sind Diaminoethan, Diaminopropane, Diaminobutane, Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder, gegebenenfalls in geringen Mengen, Diamine wie die Diethylentriamin oder 1,8-Diamino-4-aminomethyloctan. Ebenfalls möglich ist die Synthese aus Lactamen wie ε-Caprolactam oder Aminocarbonsäuren wie 11-Aminoundecansäure. Für die Funktionalisierung der Polyamide mit Aminogruppen gilt das bereits im Rahmen der Beschreibung der Polyester gesagte.

Weiterhin als Bestandteil einer erfindungsgemäßen Bindemittelkomponente geeignete Verbindungen sind beispielsweise Mercapto- oder Hydroxyverbindungen mit mindestens zwei SH- oder OH-Gruppen. Nachfolgend werden Polyolverbindungen und deren Herstellung beschrieben, wie sie im Rahmen der vorliegenden Erfindung beispielsweise einsetzbar sind. Grundsätzlich gilt, daß für die Zwecke der vorliegenden Erfindung auch die entsprechenden Mercaptoverbindungen einsetzbar sind, wie sie durch gedankliche Substitution der OH-Gruppen in den nachfolgend beschriebenen Polyolen durch SH-Gruppen beschrieben werden.

Hierunter eignen sich beispielsweise die niedermolekularen Polyhydroxy- und Polymercaptoverbindungen wie Ethylenglykol, Propylenglykol-1,2 oder -1,3, Butylenglykol-1,4, oder -1,3, Hexandiol-1,6, Octandiol-1,8, Neopentylglykol, 1,4-Hydroxymethylcyclohexan, 2-Methyl-1,3-Propandiol, Glycerin, Trimethylolpropan, Hexantriol-1,2,6, Butantriol-1,2,4, Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(hydroxyphenyl)-Ethan, Ethylendimercaptan, Propylendithiol-1,2 oder -1,3, Butylendithiol-1,4, oder -1,3, Hexandithiol-1,6, Octandithiol-1,8, Neopentyldithiol, 1,4-Mercaptomethylcyclohexan, 2-Methyl-1,3-propandithol, Thioglycerin, Trimercaptopropan, Hexantrithiol-1,2,6, Butantrithiol-1,2,4, Trimercaptoethan, Thiopentaerythrit, Mercaptomannitol, Mercaptosorbitol, Thiozucker, Thiophenol, Isononylthiophenol, Thioresorcin, Thiohydrochinon, 1,2,2- oder 1,1,2-Tris-(thiophenyl)-ethan.

Ebenfalls geeignet sind polymere Mercapto- und Hydroxyverbindungen (Polymerpolymercaptane und Polymerpolyole) mit einem Molekulargewicht von beispielsweise mehr als etwa 200 oder mehr als etwa 500. Insbesondere sind dies Polyurethanpolymercaptane und -polyole, Polyesterpolymercaptane und -polyole, Polyetherpolymercaptane und -polyole und weitere Polymercaptan- und Polyolverbindungen, wie sie im Rahmen des nachfolgenden Textes beschrieben werden.

Geeignete Polyurethanpolymercaptane und Polyurethanpolyole sind beispielsweise unter Verwendung der folgenden Bausteine herstellbar:
a) mindestens ein Polyisocyanat,
b) mindestens ein Polymercaptan oder Polyol oder ein Gemisch aus zwei oder mehr davon.

Gegebenenfalls können zusätzlich bis zu etwa 20 Gew.-% von zur Einführung von SH- oder OH-Endgruppen geeignete niedermolekulare Verbindungen (Baustein c), bezogen auf das Polyurethan-Gewicht eingesetzt werden.

Geeignete Isocyanate (Baustein a) sind beliebige organische Verbindungen, die im Durchschnitt mehr als eine, insbesondere 2 Isocyanatgruppen aufweisen.

Vorzugsweise werden Diisocyanate Q(NCO)₂ eingesetzt, wobei Q für einen aliphatischen, gegebenenfalls substituierten Kohlenwasserstoffrest mit 4 bis etwa 12 Kohlenstoffatomen, einen gegebenenfalls substituierten cycloaliphatischen Kohlenwasserstoffrest mit 6 bis etwa 15 Kohlenstoffatomen, einen gegebenenfalls substituierten aromatischen Kohlenwasserstoffrest mit 6 bis etwa 15 Kohlenstoffatomen oder einen gegebenenfalls substituierten araliphatischen Kohlenwasserstoffrest mit 7 bis etwa 15 Kohlenstoffatomen steht. Beispiele für solche Diisocyanate sind Tetramethylendiisocyanat, Hexamethylendiisocyanat (HDI), Dodecamethylendiisocyanat, Dimerfettsäurediisocyanat, 1,4-Diisocyanatocyclohexan, 1-Isocyanato-3,3,5-trimethyl-5-isocyanato-methylcyclohexan (Isophorondiisocyanat, IPDI), 4,4'-Diisocyanato-dicyclohexylmethyl, 4,4'-Diisocyanatodicyclohexylpropan-2,2, 1,3- und 1,4-Diisocyanato-benzol, 2,4- oder 2,6-Diisocyanato-toluol (2,4- oder 2,6-TDI) oder deren Gemisch, 2,2'-, 2,4 oder 4,4'-Diisocyanato-diphenylmethan (MDI), Tetramethylxylylendiisocyanat (TMXDI), p-Xylylendiisocyanat, sowie aus diesen Verbindungen bestehende Gemische.

Bevorzugt werden aliphatische Diisocyanate, insbesondere m- und p-Tetramethylxylylendiisocyanat (TMXDI) und Isophorondiisocyanat (IPDI).

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen oder Biuretgruppen aufweisende Polyisocyanate anteilig mit zu verwenden.

Als Baustein (b) eignen sich SH- oder OH-terminierte oder seitenständige SH- oder OH-Gruppen tragende Polymercaptane oder Polyole (Polymermercaptane oder Polymerpolyole) oder Polymercaptan- oder Polyolmischungen, wie sie dem Fachmann für Polyurethanherstellung bekannt sind und üblicherweise bei der Herstellung von Polyurethanen eingesetzt werden können. Im Rahmen der vorliegenden Erfindung können Polymermercaptane oder -polyole aus der Gruppe der Polyetherpolymercaptane oder -polyole, Polyesterpolymercaptane oder -polyole, Polyetheresterpolymercaptane oder -polyole, Polyalkylendimercaptane oder -polyole, Polythiocarbonate oder Polythioacetale, oder ein Gemisch aus zwei oder mehr davon, mit jeweils 2, 3, 4 oder mehr SH- oder OH-Gruppen eingesetzt werden.

Die beschriebenen Polymerpolymercaptane oder -polyole eignen sich als solche auch als einzelne Bestandteile einer erfindungsgemäßen Bindemittelkomponente. Die Nachfolgende Beschreibung der Polymerpolymercaptane oder -polyole ist daher auch so zu verstehen daß die genannten Polymerpolymercaptane oder -polyole auch als Bestandteil einer Bindemittelkomponente im erfindungsgemäßen Sinne geeignet sind.

Die genannten Polymerpolymercaptane oder -polyole und ihre Herstellung sind aus dem Stand der Technik bekannt oder können vom Fachmann mit Hilfe seines allgemeinen Fachwissens bereitgestellt werden. So können beispielsweise Polyesterpolymercaptane oder -polyole durch Reaktion von Dicarbonsäuren mit Dithiolen oder Diolen oder höheren Polythiolen oder Polyolen oder einem Gemisch von Dithiolen oder Diolen und höheren Polythiolen oder Polyolen oder einem Überschuß an Dithiolen oder Diolen oder höheren Polythiolen oder Polyolen oder deren Gemischen, sowie durch Ringöffnung von epoxidierten Estern, beispielsweise von epoxidierten Fettsäureestern, mit Thiolen oder Alkoholen hergestellt werden.

Geeignete Polyesterpolythiole oder Polyesterpolyole sind beispielsweise durch Reaktion von Dicarbonsäuren mit Dithiolen oder Diolen oder höheren Polythiolen oder Polyolen oder einem Gemisch von Dithiolen oder Diolen und höheren Polythiolen oder Polyolen oder einem Überschuß an Dithiolen oder Diolen oder höheren Polythiolen oder Polyolen oder deren Gemischen, sowie durch Ringöffnung von epoxidierten Estern, beispielsweise von epoxidierten Fettsäureestern, mit Thiolen oder Alkoholen erhältlich. Auch Polycaprolactondithiole oder Polycaprolactondiole, beispielsweise herstellbar aus ε-Caprolacton und Dithiolen oder Diolen oder höheren Polythiolen oder Polyolen sind als Polyesterpolythiole oder Polyesterpolyole geeignet. Im Rahmen der vorliegenden Erfindung sind beispielsweise Polyesterpolythiole einsetzbar, die aus niedermolekularen Dicarbonsäuren wie Bernsteinsäure, Glutarsäure, Adipinsäure, Isophthalsäure, Terephthalsäure oder Phthalsäure, oder einem Gemisch aus zwei oder mehr davon, mit einem Überschuß an linearen oder verzweigten, gesättigten oder ungesättigten aliphatischen Dithiolen mit etwa 2 bis etwa 12 Kohlenstoffatomen erhältlich sind. Gegebenenfalls kann bei der Herstellung der Polyesterpolythiole noch ein geringer Anteil an höherwertigen Thiolen vorliegen, hierzu zählen beispielsweise Thioglyzerin, Trimethylthiolpropan, Triethylthiolpropan, Thiopentaerythrit oder Thiozucker, wie Thiosorbit, Thiomannit oder Thioglucose.

In Rahmen der vorliegenden Erfindung zur Herstellung von Polyurethanpolythiolen oder Polyurethanpolyolen geeignete Polyesterpolythiole oder Polyesterpolyole sind im wesentlichen linear und weisen beispielsweise ein Molekulargewicht von etwa 1.000 bis etwa 50.000 sowie eine SH- oder OH-Zahl von etwa 10 bis etwa 200, beispielsweise etwa 20 bis etwa 80, auf.

Auch Polycaprolactondithiole oder Polycaprolactondiole, beispielsweise herstellbar aus ε-Caprolacton und Dithiolen oder Diolen oder höheren Polythiolen oder Polyolen sind als Polyesterpolythiole oder Polyesterpolyole geeignet. Im Rahmen der vorliegenden Erfindung sind zur Herstellung der Polyurethanpolythiole oder Polyurethanpolyole beispielsweise Polyesterpolythiole oder Polyesterpolyole einsetzbar, die aus niedermolekularen Dicarbonsäuren wie Bernsteinsäure, Glutarsäure, Adipinsäure, Isophthalsäure, Terephthalsäure oder Phthalsäure, oder einem Gemisch aus zwei oder mehr davon, mit einem Überschuß an linearen oder verzweigten, gesättigten oder ungesättigten aliphatischen Dithiolen oder Diolen mit etwa 2 bis etwa 12 Kohlenstoffatomen erhältlich sind. Gegebenenfalls kann bei der Herstellung der Polyesterpolythiole oder Polyesterpolyole noch ein geringer Anteil an höherwertigen Mercaptanen oder Alkoholen vorliegen, hierzu zählen beispielsweise Glyzerin, Trimethylolpropan, Triethylolpropan, Pentaerythrit oder Zuckeralkohole, wie Sorbit, Mannit oder Glucose sowie die entsprechenden Thioanalogen der genannten Hydroxyverbindungen. Vorzugsweise sind die Polyesterpolythiole oder Polyesterpolyole jedoch im wesentlichen linear.

Als Polythioacetale oder Polyacetale seien beispielsweise die Polykondensationsprodukte aus Formaldehyd und Dithiolen oder Diolen oder Polythiolen oder Polyolen oder deren Gemischen in Gegenwart saurer Katalysatoren genannt.

Polyetherpolyole oder können beispielsweise durch Homo-, Co- oder Blockpolymerisation von Alkylenoxiden wie Ethylenoxid, Propylenoxid oder Butylenoxid, oder Gemischen aus zwei oder mehr davon, oder durch Umsetzung von Polyalkylenglykolen mit di- oder trifunktionellen Alkoholen erhalten werden.

Ebenso geeignet sind die polymerisierten Ringöffnungsprodukte von cyclischen Thioethern oder Ethern, beispielsweise Tetrahydrofuran, mit entsprechenden Thiolen oder Alkoholen als Startermolekülen. Wenn als Startermoleküle Esterverbindungen, beispielsweise Oligo- oder Polyester eingesetzt werden, so erhält man Polyetherester, die sowohl Ether als auch Estergruppen aufweisen. Die genannten Verbindungen sind ebenfalls als Polythiolkomponente oder Polyolkomponente bei der Herstellung von Polyurethanpolythiolen oder Polyurethanpolyolen verwendbar.

In einer bevorzugten Ausführungsform der vorliegenden Erfindung werden als Polyetherpolyole oder als deren thioanaloge Verbindungen bei der Herstellung von Polyurethanpolyolen die Alkoxylierungsprodukte, insbesondere die Ethoxylierungs- oder Propoxylierungsprodukte di- oder trifunktioneller Thiole bzw.

Alkohole eingesetzt. Als di- oder trifunktionelle Alkohole werden insbesondere Alkohole ausgewählt aus der Gruppe bestehend aus Ethylenglykol, Diethylenglykol, Triethylenglykol, 1,2-Propandiol, Dipropylenglykol, den isomeren Butandiolen, Hexandiolen, Octandiolen, technischen Gemischen von Hydroxyfettalkoholen mit 14 bis 22 C-Atomen, insbesondere Hydroxystearylalkohol, Trimethylolpropan oder Glycerin oder Gemische aus zwei oder mehr der genannten Alkohole bzw. der thioanaloge Verbindungen eingesetzt.

Neben den oben genannten Polythiolen oder Polyolen können als Baustein b) anteilig auch lineare oder verzweigte, gesättigte oder ungesättigte aliphatische, monofunktionelle Alkohole, insbesondere Methanol, Ethanol, die Isomeren des Propanols, Butanols oder Hexanols sowie Fettalkohole mit etwa 8 bis etwa 22 C-Atomen, beispielsweise Octanol, Decanol, Dodecanol, Tetradecanol, Hexadecanol oder Octadecanol bzw. deren thioanaloge Verbindungen eingesetzt werden. Die genannten Fettthiole oder Fettalkohole sind beispielsweise durch Reduktion von natürlichen Fettsäuren erhältlich und können sowohl als Reinsubstanzen als auch in Form ihrer technischen Gemische eingesetzt werden. Gut geeignet sind beispielsweise lineare Monothiole oder Monoalkohole und insbesondere solche mit etwa 4 bis etwa 18 C-Atomen. Anstelle der linearen oder verzweigten aliphatischen Thiole oder Alkohole oder in Abmischung mit diesen sind auch Monoalkylpolyetheralkohole unterschiedlichen Molekulargewichts, vorzugsweise in den Molekulargewichtsbereichen von etwa 1.000 bis etwa 2.000, bzw. deren thioanaloge Verbindungen, einsetzbar.

Ebenfalls als Baustein b) einsetzbar sind mehrwertige, insbesondere zweiwertige Thiole oder Alkohole, wie sie beispielsweise durch Hydrierung von di- oder oligomeren Fettsäuren oder deren Estern erhältlich sind, Rizinusöl, mit C₁₋₄-Alkylalkoholen, ringgeöffnete, epoxidierte Fette oder Öle, C₁₂₋₁₈-Fettsäurediethanolamide, Monoglyceride von aliphatischen C₈₋₂₂-Fettsäuren, Polypropylenglykole oder Polysiloxane mit endständigen OH-Gruppen, oder Gemische aus zwei oder mehr der genannten Verbindungen, einsetzbar.

Zur Einführung von SH- oder OH-Endgruppen wie sie im Rahmen der vorliegenden Erfindung zur Herstellung der Polyurethanpolythiole oder Polyurethanpolyole als Baustein c) eingesetzt werden können, eignen sich beispielsweise mehrwertige, insbesondere zweiwertige Alkohole wie Ethylenglykol, Propylenglykol, Propandiol-1,3, Butandiol-1,4 oder Hexandiol-1,6 bzw. deren thioanaloge Verbindungen. Auch niedermolekulare Polyesterdithiole oder Polyesterdiole wie Bernsteinsäure-, Glutarsäure- oder Adipinsäure-bis-(hydroxyethyl)-ester oder -bis-(mercaptoethyl)-ester, oder ein Gemisch aus zwei oder mehr davon, oder niedermolekulare, Ethergruppen aufweisende Dithiole oder Diole, wie Diethylenglykol, Triethylenglykol, Tetraethylenglykol, Dipropylenglykol, Tripropylenglykol oder Tetrapropylenglykol sowie deren thioanaloge Verbindungen können als Baustein c) mit verwendet werden.

Ebenfalls als Polymerpolyole oder Polymerpolythiole geeignet, sind SH- oder OH-Gruppen tragende Polyacrylate. Diese Polyacrylate sind beispielsweise erhältlich durch die Polymerisation von ethylenisch ungesättigten Monomeren, die eine SH- oder OH-Gruppe tragen. Solche Monomeren sind beispielsweise durch die Veresterung von ethylenisch ungesättigten Carbonsäuren und difunktionellen Thiolen oder Alkoholen, wobei das Thiol oder der Alkohol in der Regel in einem leichten Überschuß vorliegt, erhältlich. Hierzu geeignete ethylenisch ungesättigte Carbonsäuren sind beispielsweise Acrylsäure, Methacrylsäure, Crotonsäure oder Maleinsäure. Entsprechende SH-Gruppen tragende Ester sind beispielsweise 2-Mercaptoethylacrylat, 2-Mercaptoethylmethacrylat, 2-Mercaptopropylacrylat, 2-Mercaptopropylacrylat, 2-Mercaptopropylmethacrylat, 3-Mercaptopropylacrylat oder 3-Mercaptopropylmethacrylat oder Gemische aus zwei oder mehr davon, entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Als in der erfindungsgemäßen Bindemittelkomponente enthaltenes Isocyanat mit mindestens zwei NCO-Gruppen eignen sich vorzugsweise aromatische Isocyanate, z.B. Diphenylmethandiisocyanat, entweder in Form der reinen Isomeren, als Isomerengemisch der 2,4'-/4,4'-Isomeren oder auch das mit Carbodiimid verflüssigte Diphenylmethandüsocyanat (MDI), das z.B. unter dem Handelsnamen Isonate 143 L bekannt ist. Außerdem kann das sogenannte "Roh-MDI", d.h., die Isomeren/Oligomerenmischung des MDI eingesetzt werden, wie sie z.B. unter dem Handelsnamen PAPI bzw. Desmodur VK im Handel erhältlich sind. Weiterhin können sogenannte Quasi-Prepolymere, d.h. Umsetzungsprodukte des MDI bzw. des Toluylendiisocyanats (TDI) mit niedermolekularen Diolen wie z.B. Ethylenglykol, Diethylenglykol, Propylenglykol, Dipropylenglykol oder Triethylenglykol verwendet werden. Obwohl die vorgenannten Isocyanate die besonders bevorzugten Isocyanate sind, können in Sonderfällen auch aliphatische bzw. cycloaliphatische Di- oder Polyisocyanate eingesetzt werden wie z.B. das hydrierte MDI (H₁₂MDI), Tetramethylxylylendiisocyanat (TMXDI), 1-Isocyanatomethyl-3-isocyanato-1,5,5-trimethyl-cyclohexan (IPDI), Hexan-1,6-diisocyanat (HDI), Biuretisierungsprodukt des HDI, Isocyanuratisierungsprodukt des HDI oder Dimerfettsäurediisocyanat. Als Isocyanate mit mindestens zwei NCO-Gruppen kommen auch Polyurethan-Prepolymere mit freien Isocyanatgruppen in Betracht, welche Addukte eines Überschusses mehrfunktioneller Isocyanate an mehrfunktionelle Alkohole, etwa die Umsetzungsprodukte eines aromatischen oder aliphatischen Diisocyanats mit Ethylenglykol, Propylenglykol, Glycerin, Trimethylolpropan oder Pentaerythrit darstellen. Auch Umsetzungsprodukte von Diisocyanaten mit Polyetherpolyolen, z.B. Polyetherpolyolen auf Basis Polyethylenoxid oder auf Basis Polypropylenoxid können als Prepolymere verwendet werden. Dem Fachmann sind eine große Anzahl derartiger Polyetherpolyole bekannt.

Weiterhin als Bestandteil der erfindungsgemäßen Bindemittelkomponente geeignet sind Polycarbonsäuren und ihre Anhydride wie Phthalsäureanhydrid, Tetrahydrophthalsäureanhydrid, Hexahydrophthalsäureanhydrid, Hexachlorendomethylentetrahydrophthalsäureanhydrid, Pyromellithsäureanhydrid, Benzophenon-3,3',4,4'-tetracarbonsäuredianhydrid, die Säuren der zuvor genannten Anhydride sowie Isophthalsäure oder Terephthalsäure.

Ebenfalls als Bestandteil der erfindungsgemäßen Bindemittelkomponente geeignet sind katalytische Härter, beispielsweise Amidine wie Dicyandiamid.

Eine erfindungsgemäße Bindemittelkomponente enthält darüber hinaus noch mindestens eine Verbindung mit chelatisierenden Eigenschaften.

Unter "chelatisierenden Eigenschaften" wird im Rahmen des vorliegenden Textes die Eigenschaft einer Verbindung verstanden, ein oder mehrere Metallionen bzw. Metallatome chelatisieren zu können und damit zur Bildung von Chelaten fähig zu sein.

Als Verbindungen mit chelatisierenden Eigenschaften eignen sich im Rahmen der vorliegenden Erfindung Verbindungen, bei denen Metalle, Gruppierungen mit einsamen Elektronenpaaren oder mit Elektronenlücken und Wasserstoff an der Ringbildung beteiligt sind. Es sind Verbindungen, die mehr als eine Koordinationsstelle an einem Metallatom besetzen, d. h. "mehrzähnig" sind (für mehrzähnig ist auch die Bezeichnung mehrzählig im Gebrauch). In diesem Falle werden also normalerweise gestreckte Verbindungen durch Komplexbildung über ein Metall-Atom oder -Ion zu Ringen geschlossen. Die Zahl der gebundenen Liganden hängt von der Koordinationszahl des zentralen Metalls ab. Voraussetzung für die Chelat-Bildung ist, daß die mit dem Metall reagierende Verb. zwei oder mehr Atomgruppierungen enthält, die als Elektronendonatoren wirken.

Eine weitere mögliche Art der Chelat-Bildung ist der Ringschluß über Wasserstoff-Brückenbindungen. Dieser Fall liegt beispielsweise in α- und β-Hydroxycarbonyl-Verbindungen vor, also Hydroxycarbonsäuren, -ketonen u. -aldehyden und ihren Analogen. Dazu gehören auch enolisierbare 1,3-Diketone wie Acetylaceton und deren Homologe. Chelatverbindungen sind besonders stabil, wenn sich Fünf- oder Sechsringe ausbilden.

Die im Rahmen der vorliegenden Erfindung einsetzbaren Verbindungen mit chelatisierenden Eigenschaften weisen im Rahmen der vorliegenden Erfindung mindestens eine funktionelle Gruppe auf, die eine Einbindung der Verbindung in ein Bindemittel ermöglicht. Es handelt sich im Rahmen der vorliegenden Erfindung bei einer solchen funktionellen Gruppe um eine Aminogruppe oder eine Mercaptogruppe. Die funktionelle Gruppe kann an den chelatisierenden Eigenschaften der Verbindung beteiligt sein. Vorzugsweise werden jedoch im Rahmen der vorliegenden Erfindung Verbindungen mit chelatisierenden Eigenschaften eingesetzt, bei denen die zur Einbindung der Verbindung in das Bindemittel benötigte funktionelle Gruppe nicht oder zumindest nicht wesentlich zu den chelatisierenden Eigenschaften der Verbindung beiträgt.

Eine Verbindung mit chelatisierenden Eigenschaften, wie sie gemäß der vorliegenden Erfindung als Bestandteil der erfindungsgemäßen Bindemittelkomponenten oder Bindemittelzusammensetzungen einsetzbar ist, weist mindestens zwei funktionelle Gruppen auf, welche die Verbindung zur Bildung von Chelatkomplexen befähigen. Eine im Rahmen der vorliegenden Erfindung einsetzbare Verbindung weist mindestens eine funktionelle Gruppe, vorzugsweise mindestens zwei funktionelle Gruppen ausgewählt aus der Gruppe bestehend aus SO₃H, OSO₃H, OP(O)(OH)₂, P(O)(OH)₂, P(O)HOH, COOH, OH, NH₂, NHR⁸, C(O)R⁸, CN oder NO₂, wobei R⁸ für Wasserstoff oder einen linearen oder verzweigten, gesättigten oder ungesättigten aliphatischen Kohlenwasserstoffrest mit 1 bis 10 C-Atomen steht, auf.

Chelatisierende Verbindungen weisen die allgemeine Formel X-Z-Y auf, wobei X und Y jeweils unabhängig voneinander für eine der oben genannten funktionellen Gruppen und Z für einen aromatischen Grundkörper steht, wobei Z mindestens eine funktionelle Gruppe aufweist, die zur Einbindung der chelatisierenden Verbindung in ein Bindemittel geeignet ist und die funktionellen Gruppen X und Y derart an Z angeordnet sind, daß sie chelatisierende Eigenschaften aufweisen.

Im Rahmen der vorliegenden Erfindung enthalten die erfindungsgemäßen Bindemittelkomponenten und Bindemittelzusammensetzungen mindestens eine aromatische Amino-Verbindung oder Mercapto-Verbindung der allgemeinen Formel I, II oder III, oder ein Gemisch aus zwei oder mehr davon, 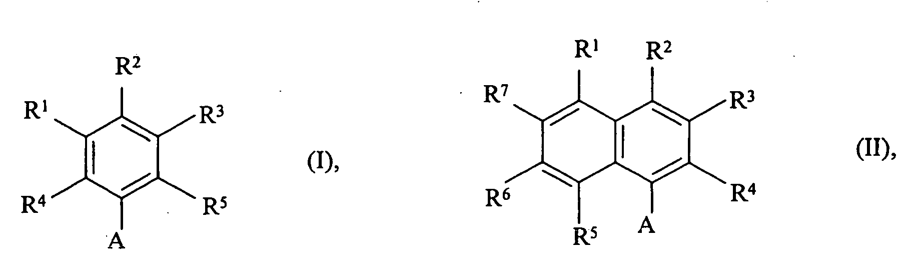 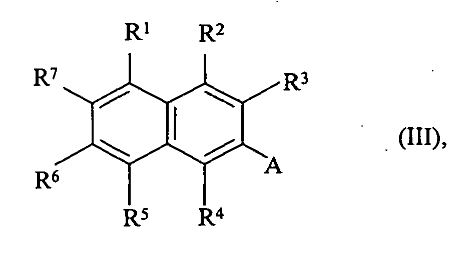 worin A für Y oder X-Y und Y für NH₂, NHR⁸ oder SH und X für einen linearen oder verzweigten Alkylrest mit 1 bis 22 C-Atomen und R¹, R², R³, R⁴, R⁵ sowie in Formeln II und III R⁶ und R⁷ unabhängig voneinander für H, SO₃H, OSO₃H, OP(O)(OH)₂, P(O)(OH)₂, P(O)HOH, COOH, OH, NH₂, NHR⁸, C(O)R⁸, CN oder NO₂, wobei R⁸ für Wasserstoff oder einen linearen oder verzweigten, gesättigten oder ungesättigten aliphatischen Kohlenwasserstoffrest mit 1 bis 10 C-Atomen steht oder zwei benachbarte Reste aus R¹ bis R⁷ zusammen einen aromatischen oder heteroaromatischen Ring bilden, enthält, wobei mindestens zwei der Reste R¹ bis R⁷ nicht für H oder einen Bestandteil eines aromatischen oder heteroaromatischen Ringsystems stehen und die verbleibenden Reste derart angeordnet sind, daß die Verbindung der allgemeinen Formel I, II oder III einen zwei- oder mehrwertigen Metalliganden in Chelatform binden kann.

Vorzugsweise werden in den erfindungsgemäßen Bindemittelkomponenten solche Verbindungen eingesetzt, in denen R⁴ und R⁵ für H stehen. Besonders bevorzugt ist es, wenn mindestens einer der Reste R¹ bis R³ für COOH steht.

Im Rahmen der vorliegenden Erfindung als chelatisierende Verbindungen geeignete Verbindungen weisen als chetatisierende Gruppen vorzugsweise eine Kombination von COOH und CHO, COOH und OH, COOH und SO₃H, COOH und COOH, SO₃H und OH, SO₃H und CHO, OP(O)(OH)₂ und COOH, OP(O)(OH)₂ und OH, OP(O)(OH)₂ und OP(O)(OH)₂, OP(O)(OH)₂ und CHO, P(O)(OH)₂ und P(O)(OH)₂, P(O)(OH)₂ und COOH, P(O)(OH)₂ und SO₃H, P(O)HOH und COOH, P(O)HOH und P(O)HOH, P(O)HOH und OH, CHO, P(O)HOH und SO₃H auf.

Eine erfindungsgemäße Bindemittelkomponente oder eine erfindungsgemäße Bindemittelzusammensetzung kann im Rahmen der vorliegenden Erfindung beispielsweise jeweils nur eine der genannten Verbindungen mit chelatisierenden Eigenschaften aufweisen. Es ist im Rahmen der vorliegenden Erfindung jedoch ebenso vorgesehen, daß eine erfindungsgemäße Bindemittelkomponente oder eine erfindungsgemäße Bindemittelzusammensetzung ein Gemisch aus zwei oder mehr der obengenannten chelatisierenden Verbindungen enthält. So kann beispielsweise eine erfindungsgemäße Bindemittelzusammensetzung, die zwei Bindemittelkomponenten enthält, zwei chelatisierende Verbindungen enthalten, wobei jeweils eine der an der erfindungsgemäßen Bindemittelzusammensetzung beteiligten Bindemittelkomponenten eine im Hinblick auf die zweite Bindemittelkomponente unterschiedliche chelatisierende Verbindung enthält. Es ist erfindungsgemäß jedoch ebenso möglich, daß eine Bindemittelkomponente zwei oder mehr unterschiedliche chelatisierende Verbindungen enthält.

Im Rahmen einer besonders bevorzugten Ausführungsform der vorliegenden Erfindung enthält eine erfindungsgemäße Bindemittelkombination oder ein erfindungsgemäßes Bindemittel Aminosalicylsäure, insbesondere 4-Amino-2-hydroxybenzoesäure oder 5-Amino-2-hydroxybenzoesäure oder ein Derivat davon oder 5-Aminoisophthalsäure oder ein Derivat davon oder 1-Amino-2-hydroxynaphthalin-4-sulfonsäure oder Aminosalicylaldehyd, 4-Aminophthalsäure, 4-Aminophthalsäuredinitril, Mercaptosalicylsäure oder Mercaptoisophthalsäure oder ein Gemisch aus zwei oder mehr der genannten Verbindungen.

Eine erfindungsgemäße Bindemittelkomponente kann eine chelatisierende Verbindung, wie oben beschrieben, oder ein Gemisch aus zwei oder mehr solcher chelatisierenden Verbindungen in einer Menge von mehr als etwa 0,05 bis etwa 50 Gew.-% enthalten. Vorzugsweise beträgt der Anteil einer chelatisierenden Verbindung oder eines Gemischs aus zwei oder mehr chelatisierenden Verbindungen an einer erfindungsgemäßen Bindemittelkomponente etwa 0,1 bis etwa 30 Gew.-%, insbesondere etwa 1 bis etwa 25 Gew.-%, beispielsweise etwa 2 bis etwa 20 Gew.-%.

Es ist im Rahmen der vorliegenden Erfindung möglich und auch vorgesehen, daß eine erfindungsgemäße Bindemittelkomponente die chelatisierende Verbindung nicht oder nicht ausschließlich in freier Form sondern bereits ganz oder teilweise in Verbindung mit einer in der Bindemittelkomponente vorliegenden Verbindung enthält. Dies wird häufig beispielsweise dann der Fall sein, wenn die chelatisierende Verbindung einer Bindemittelkomponente zugesetzt wird, die im Rahmen einer Bindemittelzusammensetzung als Harz fungiert. Wird eine chelatisierende Verbindung beispielsweise einer im Rahmen der vorliegenden Erfindung als Harz eingesetzten Epoxyverbindung zugegeben, so kann es zur Reaktion der Aminogruppe oder der Mercaptogruppe der chelatisierenden Verbindung mit der Epoxyverbindung kommen. Wenn also im Rahmen des vorliegenden Textes der Gehalt einer Bindemittelkomponente an chelatisierenden Verbindungen genannt wird, so wird darunter sowohl der Gehalt einer Bindemittelkomponente an freien chelatisierenden Verbindungen als auch der Gehalt an gebundenen chelatisierenden Verbindungen verstanden.

Die erfindungsgemäßen Bindemittelkomponenten eignen sich zur Herstellung von Bindemittelzusammensetzungen mit verbesserten Hafteigenschaften auf unterschiedlichsten Substraten.

Gegenstand der vorliegenden Erfindung ist daher auch eine Bindemittelzusammensetzung, enthaltend mindestens eine Epoxyverbindung und mindestens eine Aminoverbindung mit mindestens zwei Aminogruppen oder mindestens eine Epoxyverbindung und mindestens eine Mercaptoverbindung mit mindestens zwei SH-Gruppen oder mindestens eine Epoxyverbindung und mindestens eine Hydroxyverbindung mit mindestens zwei OH-Gruppen oder mindestens eine Epoxyverbindung und mindestens eine Aminoverbindung mit mindestens zwei Aminogruppen und mindestens eine Mercaptoverbindung mit mindestens zwei SH-Gruppen und mindestens eine Verbindung mit chelatisierenden Eigenschaften gemäß den allgemeinen Formeln I, II oder III.

Ebenfalls Gegenstand der Erfindung ist auch eine ein- oder mehrkomponentige Bindemittelzusammensetzung enthaltend mindestens ein Isocyanat mit mindestens zwei NCO-Gruppen und mindestens eine Verbindung mit chelatisierenden Eigenschaften, gemäß den allgemeinen Formeln I, II, oder III.

Die erfindungsgemäßen Bindemittelkomponenten lassen sich durch einfaches Vermischen der an den jeweiligen Bindemittelkomponenten beteiligten Verbindungen herstellen.

Gegenstand der vorliegenden Erfindung ist daher auch ein Verfahren zur Herstellung einer erfindungsgemäßen Bindemittelkomponente, bei dem mindestens eine Epoxyverbindung oder mindestens eine Aminoverbindung mit mindestens zwei Aminogruppen oder mindestens eine Hydroxyverbindung mit mindestens zwei OH-Gruppen oder mindestens eine Mercaptoverbindung mit mindestens zwei SH-Gruppen oder mindestens ein Isocyanat mit mindestens zwei NCO-Gruppen oder ein Gemisch aus zwei oder mehr der genannten Verbindungen mit mindestens einer Verbindung mit chelatisierenden Eigenschaften gemäß den allgemeinen Formeln I, II, and III vermischt wird.

Das Vermischen kann im Rahmen der vorliegenden Erfindung wesentlichen bei beliebigen Temperaturen erfolgen, bei denen die einzelnen Komponenten mischbar sind. Geeignete Temperaturen sind beispielsweise etwa 10 bis etwa 50 °C. Es ist jedoch im Rahmen des erfindungsgemäßen Verfahrens ebenso möglich und vorgesehen, daß die Herstellung einer erfindungsgemäßen Bindemittelkomponente bei erhöhter Temperatur durchgeführt wird. Dies ist insbesondere in den Fällen vorteilhaft, in denen die Verbindung mit chelatisierenden Eigenschaften und die weiteren in der Bindemittelkomponente vorliegenden Verbindungen nicht oder nur schlecht mischbar sind. In solchen Fällen kann einer Vermischung bei erhöhter Temperatur beispielsweise eine chemische Reaktion zwischen der Verbindung mit chelatisierenden Eigenschaften und der Harzkomponente bewirken, so daß die Verbindung mit chelatisierenden Eigenschaften oder ein Gemisch aus zwei oder mehr solcher Verbindungen kovalent an das Harz angebunden wird und damit ein homogenes Gemisch erhalten wird.

Im Rahmen einer weiteren bevorzugten Ausführungsform enthält eine erfindungsgemäße Bindemittelzusammensetzung beispielsweise die folgenden Komponenten:
- 20-90 Gew.-% einer Epoxyverbindung
- 3-79,9 Gew.-% eines Polymercaptans oder Polyamins als Härter
- 0-50 Gew.-% Füllstoffe
- 0-35 Gew.-% Zähmodifizierer
- 0-15 Gew.-% Hilfsstoffe
- 0,5-50 Gew.% einer chelatisierenden Verbindung
oder
- 35-90 Gew.-% einer Epoxyverbindung
- 2-10 Gew.-% eines katalytischen Härters wie Dicyandiamid
- 3-40 Gew.-% Füllstoffe
- 0-35 Gew.-% Zähmodifizierer
- 0-15 Gew.-% Hilfsstoffe
- 1-12 Gew.-% einer chelatisierenden Verbindung
oder
- 40-80 Gew.-% einer Epoxyverbindung
- 10-60 Gew.-% eines Polymercaptans oder Polyamins als Härter
- 0-5 Gew.-% Hilfsstoffe
- 2-15 Gew.-% einer chelatisierenden Verbindung, insbesondere
- 50-80 Gew.-% eines Diglycidylethers
- 10-49 Gew.-% eines mindestens zwei Aminogruppen tragenden Polyetheramins, insbesondere eines Jeffamins, oder eines Polyaminoamids als Härter und
- 2-12 Gew.-% einer chelatisierenden Verbindung
oder
- 25-60 Gew.-% einer Epoxyverbindung
- 15-40 Gew.-% eines Polyamins oder Polymercaptans
- 10-40 Gew.-% Füllstoffe
- 0-20 Gew.-% Zähmodifizierer
- 0-15 Gew.-% Hilfsstoffe
- 1-12 Gew.-% einer chelatisierenden Verbindung

Die erfindungsgemäßen Bindemittelkomponenten und Bindemittelzusammensetzungen eignen sich zur Herstellung von Oberflächenbeschichtungsmitteln, insbesondere zur Herstellung von Klebstoffen.

Gegenstand der vorliegenden Erfindung ist daher auch ein Oberflächenbeschichtungsmittel, mindestens enthaltend eine erfindungsgemäße Bindemittelkomponente, eine erfindungsgemäß hergestellte Bindemittelkomponente oder eine erfindungsgemäße Bindemittelzusammensetzung.

Ein entsprechendes erfindungsgemäßes Oberflächenbeschichtungsmittel kann beispielsweise ausschließlich aus einer erfindungsgemäßen Bindemittelzusammensetzung bestehen. Es ist jedoch erfindungsgemäß ebenso vorgesehen, daß ein Oberflächenbeschichtungsmittel neben einer erfindungsgemäßen Bindemittelzusammensetzung noch einen oder mehrere weitere Hilfs- und Zusatzstoffe enthält.

Als Hilfs- und Zusatzstoffe eignen sich beispielsweise Stabilisatoren, Entschäumer, Antioxidantien, Photostabilisatoren, Pigmentverteiler, Füllstoffe, Weichmacher, Tackifier, Farbstoffe, Indikatorfarbstoffe, Mikrobizide, Zähigkeitsmodifikatoren und dergleichen.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Henkel, Düsseldorf).

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Henkel, Düsseldorf).

In einer weiteren Ausführungsform können als Weichmacher endgruppenverschlossene Polyethylenglykole eingesetzt. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Ebenfalls im Rahmen der vorliegenden Erfindung als Weichmacher geeignet sind Diurethane. Diurethane lassen sich beispielsweise durch Umsetzung von Diolen mit OH-Endgruppen mit monofunktionellen Isocyanaten Herstellen, indem die Stöchiometrie so gewählt wird, daß im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Zur Herstellung der Diurethane auf Basis von Diolen können Diole mit 2 bis etwa 22 C-Atomen eingesetzt werden, beispielsweise Ethylenglykol, Propylenglykol, 1,2-Propandiol, Dibutandiol, Hexandiol, Octandiol oder technische Gemische von Hydroxyfettalkoholen mit etwa 14 C-Atomen, insbesondere Hydroxystearylalkohol. Bevorzugt werden lineare Diolmischungen, insbesondere solche, die Polypropylenglykol mit einem mittleren Molekulargewicht (Mₙ) von etwa 1.000 bis etwa 6.000 in Mengen über etwa 50 Gew.-%, insbesondere über etwa 70 Gew.-% enthalten. Ganz besonders bevorzugt werden Diurethane ausschließlich auf der Basis von Propylenglykol mit gleichen oder verschiedenen mittleren Molekulargewichten von etwa 1.000 bis etwa 4.000. Die freien OH-Gruppen der Diolmischungen werden im wesentlichen alle mit aromatischen oder aliphatischen Monoisocyanaten oder deren Gemischen abreagiert. Bevorzugte Monoisocyanate sind Phenylisocyanat oder Toluylenisocyanat oder deren Gemische.

Zur Herstellung der Diurethane auf Basis von Diisocyanaten werden aromatische oder aliphatische Diisocyanate oder deren Gemische eingesetzt. Als aromatische oder aliphatische Diisocyanate sind beispielsweise die Isocyanate geeignet, wie sie oben als zur Herstellung des erfindungsgemäßen Polyurethans geeignet angegeben wurden, vorzugsweise Toluylendiisocyanat (TDI). Die freien NCO-Gruppen der Diisocyanate werden im wesentlichen vollständig mit monofunktionellen Alkoholen, vorzugsweise linearen monofunktionellen Alkoholen oder Gemischen aus zwei oder mehr verschiedenen monofunktionellen Alkoholen umgesetzt. Besonders geeignet sind Gemische linearer monofunktioneller Alkohole. Geeignete Monoalkohole sind beispielsweise Monoalkohole mit 1 bis etwa 24 C-Atomen, beispielsweise Methanol, Ethanol, die Stellungsisomeren von Propanol, Butanol, Pentanol, Hexanol, Heptanol, Octanol, Decanol oder Dodecanol, insbesondere die jeweiligen 1-HydroxyVerbindungen, sowie Gemische aus zwei oder mehr davon. Ebenfalls geeignet sind sogenannte "technische Gemische" von Alkoholen und endgruppenverschlossene Polyalkylenglykolether. Besonders geeignet sind Alkoholgemische, die Polypropylenglykolmonoalkylether mit einem mittleren Molekulargewicht (Mₙ) von etwa 200 bis etwa 2.000 in einer Menge von mehr als etwa 50 Gew.-%, vorzugsweise mehr als etwa 70 Gew.-%, bezogen auf die Alkoholmischung, enthalten. Besonders bevorzugt werden Diurethane auf Basis von Diisocyanaten, deren freie NCO-Gruppen vollständig mittels Polypropylenglykolmonoalkylether mit einem mittleren Molekulargewicht von etwa 500 bis etwa 2.000 umgesetzt worden sind.

Ein erfindungsgemäßes Oberflächenbeschichtungsmittel kann weiterhin bis zu etwa 7 Gew.-%, insbesondere bis zu etwa 5 Gew.% Antioxidantien enthalten.

Ein erfindungsgemäßes Oberflächenbeschichtungsmittel kann weiterhin bis zu etwa 5 Gew.% Katalysatoren zur Steuerung der Härtungsgeschwindigkeit enthalten. Dies ist insbesondere dann vorteilhaft, wenn die Oberflächenbeschichtungsmittel bei niedrigen Temperaturen, beispielsweise bei etwa 10 bis etwa 30 °C aushärten sollen und als Bindemittel eine Verbindung mit weniger reaktiven funktionellen Gruppen, beispielsweise OH-Gruppen, enthalten.

Als Katalysatoren sind beispielsweise metallorganische Verbindungen wie Eisen- oder Zinnverbindungen geeignet, insbesondere die 1,3-Dicarbonylverbindungen des Eisens oder des 2- bzw. 4-wertigen Zinns, insbesondere die Sn(II)-Carboxylate bzw. die Dialkyl-Sn-(IV)-Dicarboxylate oder die entsprechenden Dialkoxylate, beispielsweise Dibutylzinndilaurat, Dibutylzinndiacetat, Dioctylzinndiacetat, Dibutylzinnmaleat, Zinn(II)octoat, Zinn(II)phenolat oder die Acetylacetonate des 2- bzw. 4-wertigen Zinns. Ebenfalls geeignet sind tertiäre Amine wie 2,4,6-Tris-(dimethylaminoethyl)-phenol, Imidazole wie 1-Methylimidazol, 2-Ethyl-4-methylimidazol oder Mannichbasen sowie deren Salze oder quaternäre Ammoniumverbindungen wie Benzyldimethylamin, 2,4,6-Tris-(dimethylaminoethyl)phenol, 4-Aminopyridin, Tripentylammoniumphenolat oder Tetramethylammoniumchlorid oder substituierte Harnstoffe wie N-Phenyl-N',N'-dimethylharnstoff (Fenuron), N-(4-Chlorphenyl)-N',N'-dimethylharnstoff oder N-(3-Chlor-4-methyl-phenyl)-N',N'-dimethylharnstoff (Chlortoluron). Die Auswahl weiterer geeigneter Katalysatoren, die sich im übrigen insbesondere nach dem Typ der Bindemittelzusammensetzung richtet, beispielsweise ob es sich um eine Polyester- oder eine Polyurethanzusammensetzung handelt, ist dem Fachmann auf der Grundlage der vorliegenden Erfindung ohne weiteres möglich.

Ein erfindungsgemäßes Oberflächenbeschichtungsmittel kann, bis zu etwa 20 Gew.-% an üblichen Tackifiern enthalten. Als Tackifier geeignet sind beispielsweise Harze, Terpen-Oligomere, Cumaron-/Inden-Harze, aliphatische, petrochemische Harze und modifizierte Phenolharze.

Ein erfindungsgemäßes Oberflächenbeschichtungsmittel kann bis zu etwa 40 Gew.-% , beispielsweise bis zu etwa 20 Gew.-%, an Füllstoffen enthalten. Als Füllstoffe geeignet sind beispielsweise anorganische Verbindungen wie Bariumsulfat, Kreide, Kalkmehl, gefällte Kieselsäure, pyrogene Kieselsäure, Zeolithe, Bentonite, gemahlene Mineralstoffe, Glaskugeln, Glasmehl, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln.

Ein erfindungsgemäßes Oberflächenbeschichtungsmittel kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS).

Hierzu besonders geeignet sind die Produkte Lowilite 75, Lowilite 77 (Fa. Great Lakes, USA).

Ein erfindungsgemäßes Oberflächenbeschichtungsmittel kann bis zu etwa 30 Gew.-% , beispielsweise bis zu etwa 20 Gew.-%, an Zähmodfikatoren enthalten. Als Zähmodifikatoren geeignet sind beispielsweise 1,3-Dienpolymere mit Carboxylgruppen und weiteren polaren ethylenisch ungesättigten Comonomeren. Als Diene eignen sich beispielsweise Butadien, Isopren oder Chlorbutadien, vorzugsweise Butadien. Beispiele für polare, ethylenisch ungesättigte Comonomere sind Acrylsäure, Methacrylsäure, niedere Alkylester der Acryl- oder Methacrylsäure, beispielsweise deren Methyl- oder Ethylester, Amide der Acryl- oder Methacrylsäure, Fumarsäure, Itaconsäure, Maleinsäure oder deren niedere Alkylester oder Halbester, oder Maleinsäure- oder Itaconsäureanhydrid, Vinylester wie Vinylacetat oder insbesondere Acrylnitril oder Methacrylnitril. Besonders bevorzugte Zähmodifizierer sind beispielsweise Carboxyl-terminierte Butadien-Acrylnitril Copolymere (CTBN), die in flüssiger Form unter dem Namen Hycar von der Firma B. F. Goodrich angeboten werden. Diese haben Molekulargewichte zwischen etwa 2000 und etwa 5000 und Acrylnitril-Gehalte zwischen etwa 10 Gew.-% und etwa 30 Gew.-%. Konkrete Beispiele sind Hycar CBTN 1300 X8, 1300 X13 oder 1300 X15.

Weiterhin können als Zähmodifizierer auch die aus der US-A 5,290,857 bzw. aus der US-A 5,686,509 bekannten Kern/Schale-Polymeren eingesetzt werden. Dabei sollten die Kernmonomeren eine. Glasübergangstemperatur von - 30 °C oder weniger aufweisen. Diese Monomeren können beispielsweise aus der Gruppe der oben genannten Dienmonomeren oder aus geeigneten Acrylat- oder Methacrylatmonomeren ausgewählt werden. Gegebenenfalls kann das Kempolymere in geringer Menge vernetzende Comonomereinheiten enthalten. Die Schale ist beispielsweise aus Copolymeren aufgebaut, die eine Glasübergangstemperatur von mindestens etwa 60 °C aufweisen. Die Schale ist vorzugsweise aus niederen Alkylacrylat- oder -methacrylat-Monomereinheiten (beispielsweise Methyl- oder Ethylester) sowie polaren Monomeren wie Acrylnitril, Methacrylnitril, Acrylamid, Methacrylamid, Styrol oder radikalisch polymerisierbaren ungesättigten Carbonsäuren oder Carbonsäureanhydriden aufgebaut.

Im Rahmen einer bevorzugten Ausführungsform werden als Zähmodifizierer die obenstehenden flüssigen CTBN-Kautschuke eingesetzt.

Die erfindungsgemäßen Oberflächenbeschichtungsmittel sind für ein breites Feld von Anwendungen in Bereich der Oberflächenbeschichtungen, Kleb- und Dichtstoffe geeignet. Besonders geeignet sind die erfindungsgemäßen Zubereitungen beispielsweise als Kontaktklebstoff, 1K-Klebstoff, 2K-Klebstoff, Montageklebstoff, Dichtmasse, insbesondere Fugendichtmasse, und zur Oberflächenversiegelung.

Sie weisen eine verbesserte Haftung auf Substraten, insbesondere auf Metalloberflächen, auf. Weiterhin wird die Alterungsbeständigkeit des Substrat-Polymer-Verbundes deutlich verbessert, insbesondere unter feuchten Bedingungen.

Gegenstand der Erfindung ist daher auch die Verwendung einer erfindungsgemäßen Bindemittelkomponente oder einer erfindungsgemäß hergestellten Bindemittelkomponente oder einer erfindungsgemäßen Bindemittelzusammensetzung in Oberflächenbeschichtungsmitteln.

Die erfindungsgemäßen Oberflächenbeschichtungsmittel können sowohl als 1K-Systeme als auch als 2K-Systeme vorliegen.

Die erfindungsgemäßen Oberflächenbeschichtungsmittel sind beispielsweise als Klebstoff für Kunststoffe, Metalle, Spiegel, Glas, Keramik, mineralische Untergründe, Holz, Leder, Textilien, Papier, Pappe und Gummi, insbesondere für die Verklebung von Metallen, geeignet, wobei die Materialien jeweils mit sich selbst oder beliebig untereinander verklebt werden können.

Weiterhin eignen sich die erfindungsgemäßen Oberflächenbeschichtungsmittel beispielsweise als Dichtstoff für Kunststoffe, Metalle, Spiegel, Glas, Keramik, mineralische Untergründe, Holz, Leder, Textilien, Papier, Pappe und Gummi, wobei die Materialien jeweils mit sich selbst oder beliebig gegeneinander abgedichtet werden können.

Weiterhin eignen sich die-erfindungsgemäßen Oberflächenbeschichtungsmittel beispielsweise als Oberflächenbeschichtungsmittel für Oberflächen aus Kunststoff, Metall, Glas, Keramik, mineralischen Materialien, Holz, Leder, Textilien, Papier, Pappe und Gummi.

Ebenfalls Gegenstand der vorliegenden Erfindung ist die Verwendung einer Aminoverbindung mit chelatisierenden Eigenschaften der allgemeinen Formeln I, II oder III als Haftverstärker in Oberflächenbeschichtungsmitteln.

Die Erfindung wird nachfolgend durch Beispiele näher erläutert.

### Beispiele

### Beispiel 1:

Zur Herstellung der Klebstoffe wurden Härter und chelatisierende Verbindung bei etwa 100 °C für ca. 10 Minuten gerührt. Nach dem Abkühlen auf Raumtemperatur (RT, 20°C) wurde das Harz eingerührt. Mit einem derart hergestellten Klebstoff wurden gesäuberte und entfettete Stahlbleche von 25 mm Breite mit 10 mm Überlappung verklebt und 60 Minuten bei 120 °C gehärtet. Die verklebten Bleche wurden anschließend für eine Woche gelagert. Danach wurde die Zugscherfestigkeit der Verklebung ermittelt. Auf identische Weise hergestellte weitere Prüfkörper wurden einem Kataplasmatest bei 70 °C unterworfen und sofort nach der Entnahme im feuchten Zustand auf ihre Zugscherfestigkeit untersucht.

Zur Durchführung des Kataplasmätests wurden die Prüfkörper in ein mit destilliertem Wasser getränktes Papiertuch eingewickelt. Diese Anordnung wurde an schließend mit Aluminiumfolien umschlossen und in einem luftdicht verschlossenen Kunststoffgefäß bei 70 °C für eine Woche bzw. für zwei Wochen gelagert. Nach der entsprechenden Lagerzeit wurden die Proben entnommen, bei - 20 °C eingefroren, aufgetaut und anschließend bei Raumtemperatur sofort auf ihre Zugscherfestigkeit untersucht.

Zur Überprüfung der Wirksamkeit der erfindungsgemäßen Bindemittelkomponenten wurden die in der folgenden Tabelle angegebenen Klebstoffe hergestellt.

**Tabelle 1: Klebstoffrezepturen (alle Angaben in Gew.-%)**

| Beispiel | Harz | Härter | Chelatisierende Verbindung |
|---|---|---|---|
| 1 | DGEBA 62,2 % | J D-400 37,8 % | - |
| 2 | DGEBA 60,2 % | J D-400 34,7 % | 4-Amino-2-hydroxybenzoesäure 5,1 % |
| 3 | DGEBA 60,2 % | J D-400 34,7 % | 5-Amino-2-hydroxybenzoesäure 5,1 % |
| 4 | DGEBA 62,5 % | J D-400 33,3 % | 5-Aminoisophthalsäure 5,0 % |
| 5 | DGEBA 61,7 % | J D-400 33,3 % | 1-Amino-2-hydroxynaphthalin-4-sulfonsäure 5,0 % |
| 6 | DGEBA 60,2 % | J D-400 34,7 % | 4-Aminobenzoesäure 5,1% |
| 7 | DGEBA 60,7 % | J D-400 34,3 % | Aminophenol 5,0 % |

| | | | |
|---|---|---|---|
| DGEBA = Bisphenol A-Diglycidylether J D-400 = Jeffamin D-400 (Hersteller: Huntsman Chemical Company) | | | |

Die Beispiele 1, 6 und 7 sind Vergleichsbeispiele.

Die ermittelten Zugscherfestigkeiten nach 1 Woche Lagerung und nach 1 beziehungsweise 2 Wochen im Kataplasmatest sind in der nachfolgenden Tabelle 2 wiedergegeben.

**Tabelle 2: Zugscherfestigkeiten der Prüfkörper (alle in MPa)**

| Beispiel | ZSF 1 | ZSF 2 | ZSF 3 |
|---|---|---|---|
| 1 | 23,5 | 9,0 | 9,2 |
| 2 | 29, 3 | 14,1 | 17, 3 |
| 3 | 32,3 | 20 | 24,1 |
| 4 | 30,8 | 14,2 | 16,9 |
| 5 | 28,2 | 14,2 | 15,4 |
| 6 | 23,4 | 9,4 | 4,4 |
| 7 | 23,1 | 12,1 | 12,3 |

| | | | |
|---|---|---|---|
| ZSF 1 = Zugscherfestigkeit nach 1 Woche Lagerung bei RT ZSF 2 = Zugscherfestigkeit nach 1 Woche Kataplasmatest ZSF 3 = Zugscherfestigkeit nach 2 Wochen Kataplasmatest | | | |

### Beispiel 2:

Referenzklebstoff (nicht erfindungsgemäß): Zur Herstellung der Harzkomponente eines 2-K-Klebstoffs wurden 10,8 g Ricinusöl mit 1,67 g Baylith-L-Paste (Zeolithbasiertes, Ricinusöl-haltiges Trockenmittel, Hersteller Bayer AG) bei 20°C vermengt. Anschließend wurden 5,19 g UK 5400 (Härterkomponente des lösungsmittelfreien Zweikomponenten-Klebstoffs Macroplast UK 8202, auf Basis von Isocyanaten; Dichte 1,22±0,05 g/cm³; Viskosität [Brookfield RVT, 20°C] 250±100 mPa.s; Hersteller Henkel KgaA) als Härter zugemischt.

Erfindungsgemäßer Klebstoff: Zur Herstellung der Harzkomponente eines 2-K-Klebstoffs wurden 10,8 g Ricinusöl mit 1,67 g Baylith-L-Paste und 0.624 g 4-Aminosalicylsäure bei 20°C vermengt. Anschließend wurden 6,28 g UK 5400 als Härter zugemischt. Die gegenüber dem Referenzklebstoff verwendete zusätzliche Menge an Härter wurde so berechnet, daß einer Aminogruppe der eingesetzten 4-Aminosalicylsäure zwei NCO-Gruppen des Härters entsprachen, d. h. daß auf der Basis der Isocyanat-reaktiven Amino-Wasserstoffatome der eingesetzten 4-Aminosalicylsäure ein Äquivalent 4-Aminosalicylsäure durch zwei Äquivalente des Isocyanats kompensiert wurden.

Mit den Klebstoffen wurden gesandstrahlte und entfettete Stahlbleche (Referenzversuch 2.1 und erfindungsgemäßer Versuch 2.2) bzw. mit einer chromfreien Vorbehandlung bestehend aus den Schritten alkalische Reinigung (Ridoline 1580; Hersteller Henkel KgaA), Dekapierung (Deoxidizer 4902; Hersteller Henkel KgaA) und Passivierung (Alodine 2040; Hersteller Henkel KgaA) vorbehandelte Aluminiumbleche (Referenzversuch 2.3 und erfindungsgemäßer Versuch 2.4) auf einer Fläche von 10 x 20 mm verklebt. Die so erhaltenen Prüfkörper wurden anschließend 14 Tage lang bei 20°C gelagert. Danach wurde die Zugscherfestigkeit der Verklebung ermittelt. Auf identische Weise hergestellte weitere Prüfkörper wurden einem Kataplasmatest bei 70 °C unterworfen und sofort nach der Entnahme im feuchten Zustand auf ihre Zugscherfestigkeit untersucht.

Zur Durchführung des Kataplasmatests wurden die Prüfkörper, nachdem sie 14 Tage lang bei 20°C gelagert worden waren, in mit destilliertem Wasser getränkte Watte eingewickelt. Diese Anordnung wurde anschließend mit Aluminiumfolie umschlossen und in einem luftdicht verschlossenen Kunststoffgefäß bei 70 °C für eine Woche bzw. für zwei bzw. für vier Wochen gelagert. Nach der entsprechenden Lagerzeit wurden die Proben entnommen, für jeweils 16 Stunden auf - 30 °C abgekühlt, anschließend auf 20°C gebracht und die Prüfkörper sofort auf ihre Zugscherfestigkeit untersucht.

Die ermittelten Zugscherfestigkeiten nach 2 Wochen bei 20°C bzw. nach 1, 2 und 4 Wochen im Kataplasmatest sind in der nachfolgenden Tabelle 3 wiedergegeben.

**Tabelle 3: Zugscherfestigkeiten der Prüfkörper (alle in MPa)**

| Versuch | ZSF 0 | ZSF 1 | ZSF 2 | ZSF 4 |
|---|---|---|---|---|
| 2.1 | 4,3 | 3,2 | 1,9 | 2,1 |
| 2.2 | 10,2 | 10,9 | 9,7 | 8,3 |
| 2.3 | 3,62 | 3,08 | 3,90 | 3,71 |
| 2.4 | 5,34 | 8,11 | 6,98 | 5,42 |

| | | | | |
|---|---|---|---|---|
| ZSF 0 = Zugscherfestigkeit nach 2 Wochen Lagerung bei 20°C ZSF 1 = Zugscherfestigkeit nach 1 Woche Kataplasmatest ZSF 2 = Zugscherfestigkeit nach 2 Wochen Kataplasmatest ZSF 4 = Zugscherfestigkeit nach 4 Wochen Kataplasmatest | | | | |

### Beispiel 3:

Referenzklebstoff (nicht erfindungsgemäß): 20 g UK 8202 (Harzkomponente des lösungsmittelfreien Zweikomponenten-Klebstoffs Macroplast UK 8202, auf Basis hydroxylgruppenhaltiger organischer Verbindungen; Dichte 1,45±0,05 g/cm³; Viskosität [Brookfield RVT, 20°C] 27.000±4.000 mPa.s; Hersteller Henkel KgaA) und 5,0 g UK 5400 wurden bei 20°C vermengt.

Erfindungsgemäßer Klebstoff: 20 g UK 8202, 1,0 g 4-Aminosalicylsäure und 6,74 g UK 5400 wurden bei 20°C vermengt. Die gegenüber dem Referenzklebstoff verwendete zusätzliche Menge an Härter wurde wiederum so berechnet, daß auf der Basis der Isocyanat-reaktiven Amino-Wasserstoffatome der eingesetzten 4-Aminosalicylsäure ein Äquivalent 4-Aminosalicylsäure durch zwei Äquivalente des Isocyanats kompensiert wurden.

Mit den Klebstoffen wurden Aluminiumbleche, die wie in Beispiel 2 vorbehandelt worden waren (Referenzversuch 3.1 und erfindungsgemäßer Versuch 3.2) bzw. lediglich mit Aceton gereinigte, ansonsten aber unbehandelte Aluminiumbleche (Referenzversuch 3.3 und erfindungsgemäßer Versuch 3.4) auf einer Fläche von 10 x 20 mm verklebt. Mit den so erhaltenen Prüfkörpern wurde in identischer Weise wie in Beispiel 2 verfahren.

Die analog Beispiel 2 ermittelten Zugscherfestigkeiten nach 2 Wochen bei 20°C bzw. nach 1, 2 und 4 Wochen im Kataplasmatest sind in der nachfolgenden Tabelle 4 wiedergegeben.

**Tabelle 4: Zugscherfestigkeiten der Prüfkörper (alle in MPa)**

| Versuch | ZSF 0 | ZSF 1 | ZSF 2 | ZSF 4 |
|---|---|---|---|---|
| 3.1 | 13,0 | 1,34 | 0,54 | 0,81 |
| 3.2 | 14,4 | 15,1 | 14,0 | 13,4 |
| 3.3 | 10,2 | 2,21 | 3,48 | 1,20 |
| 3.4 | 14,6 | 10,5 | 5,58 | 8,25 |

| | | | | |
|---|---|---|---|---|
| ZSF 0 = Zugscherfestigkeit nach 2 Wochen Lagerung bei 20°C ZSF 1 = Zugscherfestigkeit nach 1 Woche Kataplasmatest ZSF 2 = Zugscherfestigkeit nach 2 Wochen Kataplasmatest ZSF 4 = Zugscherfestigkeit nach 4 Wochen Kataplasmatest | | | | |

## Patentansprüche

1. Bindemittelkomponente, enthaltend mindestens eine Epoxyverbindung oder mindestens eine Aminoverbindung mit mindestens zwei Aminogruppen oder mindestens eine Hydroxyverbindung mit mindestens zwei OH-Gruppen oder mindestens eine Mercaptoverbindung mit mindestens zwei SH-Gruppen oder mindestens ein Isocyanat mit mindestens zwei NCO-Gruppen und mindestens eine Verbindung mit chelatisierenden Eigenschaften, die eine Amino- oder eine Mercaptogruppe enthält, wobei die Verbindung ausgewählt wird aus aromatischen Amino-Verbindungen oder Mercapto-Verbindungen der allgemeinen Formel I, II oder III 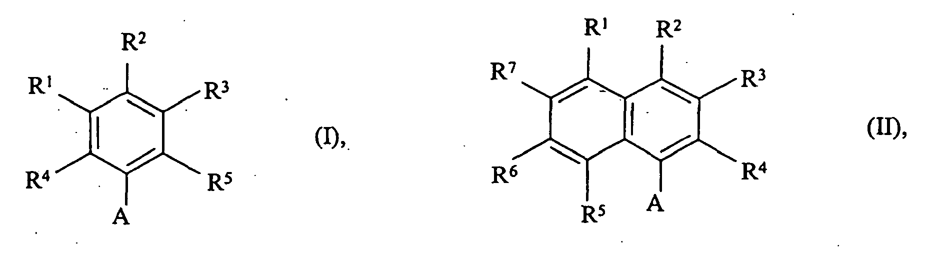 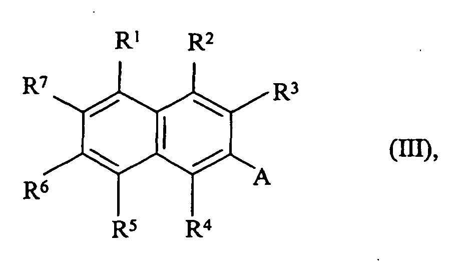 worin A für Y oder X-Y und Y für NH₂, NHR⁸ oder SH und X für einen linearen oder verzweigten Alkylrest mit 1 bis 22 C-Atomen und R¹, R², R³, R⁴, R⁵ sowie in Formeln II und III R⁶ und R⁷ unabhängig voneinander für H, SO₃H, OP(O)(OH)₂, P(O)(OH)₂, P(O)HOH, COOH, OH, NH₂, NHR⁸, C(O)R⁸, CN oder NO₂, wobei R⁸ für Wasserstoff oder einen linearen oder verzweigten, gesättigten oder ungesättigten aliphatischen Kohlenwasserstoffrest mit 1 bis 10 C-Atomen steht oder zwei benachbarte Reste aus R¹ bis R⁷ zusammen einen aromatischen oder heteroaromatischen Ring bilden, enthält, wobei mindestens zwei der Reste R¹ bis R⁷ nicht für H oder einen Bestandteil eines aromatischen oder heteroaromatischen Ringsystems stehen und die verbleibenden Reste derart angeordnet sind, dass die Verbindung der allgemeinen Formel I, II oder III einen zwei- oder mehrwertigen Metalliganden in Chelatform binden kann.

2. Bindemittelkomponente nach Anspruch 1, **dadurch gekennzeichnet, dass** sie eine Verbindung der allgemeinen Formel I enthält.

3. Bindemittelkomponente nach Anspruch 1 oder 2, **dadurch gekennzeichnet, dass** mindestens einer der Reste R¹ bis R⁷ für COOH steht.

4. Bindemittelkomponente nach einem der Ansprüche 1 bis 3, **dadurch gekennzeichnet, daß** sie als mindestens eine Verbindung mit chelatisierenden Eigenschaften Aminosalicylsäure oder ein Derivat davon oder Aminoisophthalsäure oder ein Derivat davon oder ein Gemisch aus zwei oder mehr der genannten Verbindungen enthält.

5. Verfahren zur Herstellung einer Bindemittelkomponente gemäß einem der Ansprüche 1 bis 4, bei dem mindestens eine Epoxyverbindung oder mindestens eine Aminoverbindung mit mindestens zwei Aminogruppen oder mindestens eine Hydroxyverbindung mit mindestens zwei OH-Gruppen oder mindestens eine Mercaptoverbindung mit mindestens zwei SH-Gruppen oder mindestens ein Isocyanat mit mindestens zwei NCO-Gruppen oder ein Gemisch aus zwei oder mehr der genannten Verbindungen mit mindestens einer Verbindung mit chelatisierenden Eigenschaften gemäß den allgemeinen Formeln I, II und III vermischt wird.

6. Bindemittelzusammensetzung, enthaltend mindestens eine Epoxyverbindung und mindestens eine Aminoverbindung mit mindestens zwei Aminogruppen oder mindestens eine Hydroxyverbindung mit mindestens zwei OH-Gruppen oder mindestens eine Mercaptoverbindung mit mindestens zwei SH-Gruppen oder mindestens ein Isocyanat mit mindestens zwei NCO-Gruppen oder ein Gemisch aus zwei oder mehr davon und mindestens eine Verbindung mit chelatisierenden Eigenschaften nach Anspruch 1 bis 4.

7. Oberflächenbeschichtungsmittel, mindestens enthaltend eine Bindemittelkomponente gemäß einem der. Ansprüche 1 bis 4 oder eine nach Anspruch 5 hergestellte Bindemittelkomponente oder eine Bindemittelzusammensetzung nach Anspruch 6.

8. Oberflächenbeschichtungsmittel nach Anspruch 7, **dadurch gekennzeichnet, dass** es ein Klebstoff ist.

9. Verwendung einer Bindemittelkomponente gemäß einem der Ansprüche 1 bis 4 oder einer nach Anspruch 5 hergestellten Bindemittelkomponente oder einer Bindemittelzusammensetzung nach Anspruch 6 in Oberflächenbeschichtungsmitteln.

10. Verwendung einer Aminoverbindung mit chelatisierenden Eigenschaften der allgemeinen Formel I, II oder III als Haftverstärker in Oberflächenbeschichtungsmitteln.

## Claims

1. Binder component comprising at least one epoxy compound or at least one amino compound having at least two amino groups or at least one hydroxy compound having at least two OH groups or at least one mercapto compound having at least two SH groups or at least one isocyanate having at least two NCO groups and at least one compound having chelating properties, which contains an amino group or a mercapto group, the compound being selected from aromatic amino compounds or mercapto compounds of the general formula I, II or III 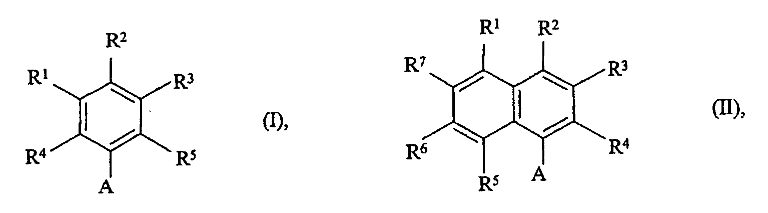 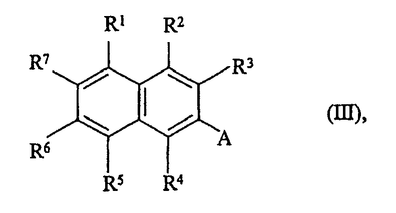 in which A is Y or X-Y, and Y is NH₂, NHR⁸ or SH, and X is a linear or branched alkyl radical having 1 to 22 carbon atoms, and R¹, R², R³, R⁴, R⁵, and in formulae II and III, R⁶ and R⁷, independently of one another, are H, SO₃H, OSO₃H, OP(O)(OH)₂, P(O)(OH)₂, P(O)HOH, COOH, OH, NH₂, NHR⁸, C(O)R⁸, CN or NO₂, in which R⁸ is hydrogen or a linear or branched, saturated or unsaturated aliphatic hydrocarbon radical having 1 to 10 carbon atoms, or two adjacent radicals from R¹ to R⁷ together form an aromatic or heteroaromatic ring, at least two of the radicals R¹ to R⁷ not being H or part of an aromatic or heteroaromatic ring system, and the remaining radicals being arranged such that the compound of the general formula I, II or III is able to bind a divalent or polyvalent metal ligand in chelate form.

2. Binder component according to Claim 1, **characterized in that** it comprises a compound of the general formula I.

3. Binder component according to Claim 1 or 2, **characterized in that** at least one of the radicals R¹ to R⁷ is COOH.

4. Binder component according to one of Claims 1 to 3, **characterized in that** it comprises as at least one compound having chelating properties aminosalicylic acid or a derivative thereof or aminoisophthalic acid or a derivative thereof or a mixture of two or more of said compounds.

5. Process for preparing a binder component in accordance with one of Claims 1 to 4, wherein at least one epoxy compound or at least one amino compound having at least two amino groups or at least one hydroxy compound having at least two OH groups or at least one mercapto compound having at least two SH groups or at least one isocyanate having at least two NCO groups or a mixture of two or more of said compounds is mixed with at least one compound having chelating properties in accordance with the general formulae I, II and III.

6. Binder composition comprising at least one epoxy compound and least one amino compound having at least two amino groups or at least one hydroxy compound having at least two OH groups or at least one mercapto compound having at least two SH groups or at least one isocyanate having at least two NCO groups or a mixture of two or more thereof and at least one compound having chelating properties according to Claims 1 to 4.

7. Surface coating composition, at least comprising a binder component in accordance with one of Claims 1 to 4 or a binder component prepared according to Claim 5 or a binder composition according to Claim 6.

8. Surface coating composition according to Claim 7, **characterized in that** it is an adhesive.

9. Use of a binder component in accordance with one of Claims 1 to 4 or of a binder component prepared according to Claim 5 or of a binder composition according to Claim 6 in surface coating compositions.

10. Use of an amino compound having chelating properties of the general formula I, II or III as an adhesion promoter in surface coating compositions.

## Revendications

1. Composant de liant contenant au moins un composé époxy ou au moins un composé amino comprenant au moins deux groupes amino ou au moins un composé hydroxy comprenant au moins deux groupes OH ou au moins un composé mercapto comprenant au moins deux groupes SH ou au moins un isocyanate comprenant au moins deux groupes NCO, et au moins un composé possédant des propriétés de chélation, qui contient un groupe amino ou un groupe mercapto, le composé étant choisi parmi des composés amino aromatiques ou des composés mercapto répondant aux formules générales I, II ou III 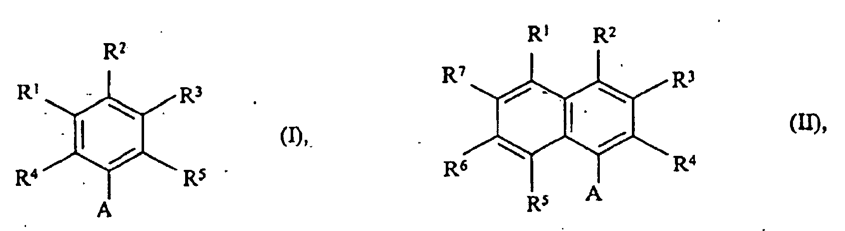 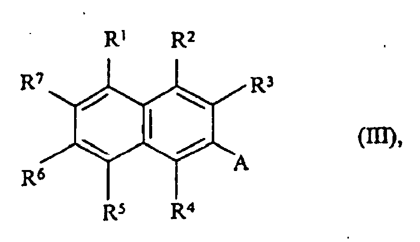 dans lesquelles A représente un groupe Y ou un groupe X-Y et Y représente un groupe NH₂, un groupe NHR⁸ ou un groupe SH et X représente un radical alkyle linéaire ou ramifié contenant de 1 à 22 atomes de carbone, et R¹, R², R³, R⁴, R⁵ et, dans les formules II et III, R⁶ et R⁷ représentent, indépendamment l'un de l'autre, un atome d'hydrogène, un groupe SO₃H un groupe OSO₃H, un groupe OP(O)(OH)₂, un groupe P(O)(OH)₂, un groupe P(O)HOH, un groupe COOH, un groupe OH, un groupe NH₂, un groupe NHR⁸, un groupe C(O)R⁸, un groupe CN ou un groupe NO₂ R⁸ représentant un atome d'hydrogène ou un radical d'hydrocarbure aliphatique saturé ou insaturé, linéaire ou ramifié, contenant de 1 à 10 atomes de carbone, ou bien deux radicaux voisins parmi R¹ à R⁷ forment ensemble un noyau aromatique ou hétéroaromatique, au moins deux des radicaux R¹ à R⁷ ne représentant pas un atome d'hydrogène ou un constituant d'un système à noyau aromatique ou hétéroaromatique, et les radicaux restants étant disposés de telle sorte que le composé répondant à la formule générale I, II ou III peut lier un ligand métallique divalent ou polyvalent sous la forme d'un chélate.

2. Composant de liant selon la revendication 1, **caractérisé en ce qu'**il contient un composé répondant à la formule générale I.

3. Composant de liant selon la revendication 1 ou 2, **caractérisé en ce qu'**au moins un des radicaux R¹ à R⁷ représente un groupe COOH.

4. Composant de liant selon l'une quelconque des revendications 1 à 3, **caractérisé en ce qu'**il contient, à titre d'au moins un composé possédant des propriétés de chélation, un acide aminosalicylique ou un dérivé de ce dernier ou un acide aminoisophtalique ou un dérivé de ce dernier ou un mélange de deux des composés mentionnés ou plus.

5. Procédé pour la préparation d'un composant de liant selon l'une quelconque des revendications 1 à 4, dans lequel on mélange au moins un composé époxy ou au moins un composé amino comprenant au moins deux groupes amino ou au moins un composé hydroxy comprenant au moins deux groupes OH ou au moins un composé mercapto comprenant au moins deux groupes SH ou au moins un isocyanate comprenant au moins deux groupes NCO ou un mélange de deux des composés mentionnés ou plus avec au moins un composé possédant des propriétés de chélation répondant aux formules générales I, II et III.

6. Composition de liant, contenant au moins un composé époxy et au moins un composé amino comprenant au moins deux groupes amino ou au moins un composé hydroxy comprenant au moins deux groupes OH ou au moins un composé mercapto comprenant au moins deux groupes SH ou au moins un isocyanate comprenant au moins deux groupes NCO ou un mélange de deux des composés mentionnés ou plus et au moins un composé possédant des propriétés de chélation selon les revendications 1 à 4.

7. Agent d'enduction de surface, au moins contenant un composant de liant selon l'une quelconque des revendications 1 à 4 ou un composant de liant préparé conformément à la revendication 5 ou une composition de liant selon la revendication 6.

8. Agents d'enduction de surface selon la revendication 7, **caractérisé en ce qu'**il s'agit d'un adhésif.

9. Utilisation d'un composant de liant selon l'une quelconque des revendications 1 à 4 ou d'un composant de liant préparé conformément à la revendication 5 ou d'une composition de liant selon la revendication 6 dans des agents d'enduction de surfaces.

10. Utilisation d'un composé amino possédant des propriétés de chélation, répondant aux formules générales I, II ou III à titre de renforçateur de l'adhérence dans des agents d'enduction de surfaces.
